# EUROPEAN PATENT APPLICATION

(11) **EP 1 608 117 A1**
(43) Date of publication of application: **21.12.2005**
(21) Application number: 04708014.8
(22) Date of filing: 04.02.2004
(51) Int. Cl.: H04L 12/66

(54) **COMMUNICATION SYSTEM, AND COMMUNICATION CONTROL SERVER AND COMMUNICATION TERMINALS CONSTITUTING THAT COMMUNICATION SYSTEM**

(30) Priority: 04.02.2003 JP 2003027677
(71) Applicant: MATSUSHITA ELECTRIC INDUSTRIAL CO., LTD., Kadoma-shi, Osaka 571-8501 (JP)
(72) Inventor: MUNETSUGU, Toshihiko, Neyagawa-shi, Osaka 572-0080 (JP); NAGATOMO, Kenichi, Itami-shi, Hyogo 664-0847 (JP); ABE, Minobu, Hirakata-shi, Osaka 573-0062 (JP)
(74) Representative: Grünecker, Kinkeldey, Stockmair & Schwanhäusser Anwaltssozietät
(86) International application number: PCT/JP2004/001099
(87) International publication number: WO 2004/071037

(57) **Abstract**

A communication systems (100) comprises terminals (103, 104) and an intermediate server (101) that notifies destination information for determining the address of the second communication terminal on the network. The terminal (103) transmits to the intermediate server (101) a request message for requesting the destination information. The intermediate server (101) comprises a storage unit (206) that has stored a permitted-terminal table indicative of correspondence between the terminal (104) and a terminal permitted to be connected with the terminal (104); a reception unit (203) for receiving the request message; and a control part (201) for determining, based on the permitted-terminal table, whether the terminal (103) that has transmitted the received request message is a terminal permitted, by the terminal (104), to be connected with the terminal (104), and for notifying the terminal (103) of the destination information of the terminal (104) only if the terminal (103) is a terminal permitted to be connected with the terminal (104).

## Description

### Technical Field

The present invention relates to a communication system in which communication control is performed between terminals connected via a communication network, a communication control method in the communication system, and a communication control server and communication terminals that compose the communication system.

### Background Art

With the development of communication network infrastructure in recent years, many users are connecting to the Internet. In addition, broadband network access has become possible due to the spread of high-speed access links such as DSL, cable modems, and optical fibers.

Furthermore, various new types of terminals that connect to the Internet have been developed, and even home appliances such as televisions and hard disk video recorders that use the Internet have been developed. In addition to conventional server-client service, the Internet can now also be used for Peer to Peer services by which user terminals communicate with each other directly.

Generally, a terminal used by a subscriber to a network service is dynamically allocated an IP address at the time of connecting to the Internet using PPP (Point to Point Protocol), PPoE (PPP over Ethernet), or the like. As such, the IP address of the terminal changes with each connection.

Therefore, it is necessary to provide a structure that enables terminals making a Peer to Peer connection to acquire the IP address allocated to the other terminal at that time. Patent Documents 1 and 2, which are described later, are disclosed as conventional techniques for solving this problem.

According to these techniques, a user terminal that connects to the Internet according to a dial-up connection or the like can do so without other users experiencing problems, and communication between user terminals can be established easily.

However, in the aforementioned communication between user terminals, since each user terminal connected to the Internet specifies its IP address, user terminals are accessible from anywhere. For this reason, a problem arises of users experiencing inconveniences such as other parties making unwanted connections for malicious purposes or the like.

### Disclosure of the Invention

In view of the stated problem, the present invention has an object of providing a communication control server, a communication terminal and a communication system that effectively prevent unwanted connections from other user terminals in communication between user terminals.

In order to achieve the stated object, the present invention is a communication system including a first communication terminal, a second communication terminal, and a communication control server, the communication control server notifying destination information for specifying an address of the second communication terminal on a network, and the first communication terminal transmitting a request message to the communication control server to request the destination information, the communication control server including: a permitted-terminal table storage unit operable to store a permitted-terminal table that shows correlation between the second communication terminal and one or more connection-permitted communication terminals that are permitted to connect to the second communication terminal; a request message reception unit operable to receive the request message; a terminal determination unit operable to determine, based on the permitted-terminal table, whether or not the first communication terminal that transmitted the received request message is a connection-permitted communication terminal; and a notification control unit operable to notify the first communication terminal of the destination information, only when the first communication terminal has been determined to be a connection-permitted communication terminal.

Here, the address may be an IP address.

Here, the address may be composed of an IP address and a port number.

Furthermore, the present invention is a communication control server that notifies destination information for specifying an address of a communication terminal, including: a permitted-terminal table storage unit operable to store a permitted-terminal table that shows correlation between the communication terminal and one or more connection-permitted communication terminals that are permitted to connect to the communication terminal; a request message reception unit operable to receive a request message from a request-source communication terminal, the request message requesting the destination information; a terminal determination unit operable to determine, based on the permitted terminal table, whether or not the request-source communication terminal is a connection-permitted communication terminal; and a notification control unit operable to notify the request-source communication terminal of the destination information of the communication terminal, only when the request-source communication terminal is determined to be a connection-permitted communication terminal.

Accordingly, address information necessary for connection is notified only to a communication terminal that has advance permission to connect. Therefore, the user of the communication terminal can effectively prevent connection from users from which he/she does not wish to receive connection.

Here, in the communication system, the notification control unit may include: an authentication information creation sub-unit operable to, only when the first communication terminal has been determined to be a connection-permitted terminal, create authentication information for the second communication terminal to authenticate the first communication terminal, the notification control unit may further notify the authentication information to the first communication terminal and the second communication terminal, the first communication terminal may transmit the notified authentication information to the second communication terminal when making a connection request to the second communication terminal, and the second communication terminal may include: a reception unit operable to receive the authentication information from the first communication terminal; a determination unit operable to determine whether or not the received authentication information and the notified authentication information match; and a connection control unit operable to permit a connection from the first communication terminal, only when the received authentication information and the notified authentication information match.

Furthermore, the present invention is a communication terminal that is connected to a communication control server over a network, including: a permitted-communication terminal registration request unit operable to make a request, to the communication control server, to register one or more communication terminals that are permitted to connect to the communication terminal; an authentication information reception unit operable to, when a communication terminal that has requested destination information for specifying an address of the communication terminal on the network is any one of the communication terminal that is permitted to connect to the communication terminal, receive authentication information for authenticating the communication terminal that requested the destination information; an identification information reception unit operable to receive, from the communication terminal that requested the destination information, a connection acceptance request and identification information that identifies the communication terminal that requested the destination information; a determination unit operable to determine whether or not the authentication information and the identification information match; and a connection control unit operable to permit a connection based on the connection acceptance request from the terminal that requested the destination information,only when the authenticationinformation and the identification information match.

Furthermore, the present invention is a connection control program used in a communication terminal that is connected to a communication control server over a network, the connection control program including: a permitted-communication terminal registration request step of making a request, to the communication control server, to register one or more communication terminals that are permitted to connect to the communication terminal; an authentication information reception step of, when a communication terminal that has requested destination information for specifying an address of the communication terminal on the network is any one of the communication terminals that are permitted to connect to the communication terminal, receiving authentication information for authenticating the communication terminal that requested the destination information; an identification information reception step of receiving, from the communication terminal that requested the destination information, a connection acceptance request and identification information that identifies the communication terminal that requested the destination information; a determination step of determining whether or not the authentication information and the identification information match; and a connection control step of permitting a connection based on the connection acceptance request from the terminal that requested the destination information, only when the authentication information and the identification information match.

Furthermore, the present invention is a computer-readable recording medium on which is recorded a connection control program used in a communication terminal that is connected to a communication control server over a network, the connection control program including: a permitted-communication terminal registration request step of making a request, to the communication control server, to register one or more communication terminals that are permitted to connect to the communication terminal; an authentication information reception step of, when a communication terminal that has requested destination information for specifying an address of the communication terminal on the network is any one of the communication terminals that are permitted to connect to the communication terminal, receiving authentication information for authenticating the communication terminal that requested the destination information; an identification information reception step of receiving, from the communication terminal that requested the destination information, a connection acceptance request and identification information that identifies the communication terminal that requested the destination information; a determination step of determining whether or not the authentication information and the identification information match; and a connection control step of permitting a connection based on the connection acceptance request from the terminal that requested the destination information, only when the authentication information and the identification information match.

Furthermore, the present invention is a connection control method used in a communication terminal that is connected to a communication control server over a network, the connection control method including: a permitted-communication terminal registration request step of making a request, to the communication control server, to register one or more communication terminals that are permitted to connect to the communication terminal; an authentication information reception step of, when a communication terminal that has requested destination information for specifying an address of the communication terminal on the network is any one of the communication terminals that are permitted to connect to the communication terminal, receiving authentication information for authenticating the communication terminal that requested the destination information; an identification information reception step of receiving, from the communication terminal that requested the destination information, a connection acceptance request and identification information that identifies the communication terminal that requested the destination information; a determination step of determining whether or not the authentication information and the identification information match; and a connection control step of permitting a connection based on the connection acceptance request from the terminal that requested the destination information, only when the authentication information and the identification information match.

Accordingly, the communication control server can perform the task of issuing authentication information with respect to the communication terminal that requested connection, instead of the communication terminal. Therefore, the communication terminal to which the request for connection is being made can proceed with the task of authentication relatively easily.

Here, in the communication system, the notification control unit may include: an encrypt key creation unit operable to create an encrypt key for encryption and decryption of information transmitted between the first communication terminal and the second communication terminal, and the notification control unit further notifies the encrypt key to the first communication terminal and the second communication terminal.

This structure effectively prevents authentication information transmitted between communication terminals from being wrongfully acquired and decoded by a third party.

Here, in the communication system the communication terminal may further include a storage unit operable to store a plurality of types of communication data potentially transmitted to a callee communication terminal, each type of communication data being stored in correspondence with a respective data attribute thereof; a transmission unit operable to transmit a request message to the communication control server, the request message requesting destination information for specifying the address of a callee communication terminal on the network; an acquisition unit operable to obtain the destination information notified by the server, only when the communication terminal is permitted to connect to the callee terminal; a connection establishment unit operable to establish a connection with the callee communication terminal based on the acquired destination information; a designation reception unit operable to receive a designation of communication data to be transmitted; a data attribute determination unit operable to determine whether or not the designated communication data has a specific data attribute; a transfer ask unit operable to, when the designated communication data has the specific data attribute, ask the communication control server to transfer the designated communication data to the callee communication terminal; and a transmission control unit operable to control such that (i) when the designated communication data has the specific data attribute, the designated communication data is transmitted to the communication control server, and (ii) when the designated communication data does not have the specific data attribute, the designated communication data is transmitted directly to the callee terminal.

Furthermore, in the communication terminal, the address may be an IP address.

Furthermore, in the communication terminal, the address may be composed of an IP address and a port number.

Furthermore, in the communication terminal, the address may change from time to time.

Accordingly, the communication data to be transmitted to the callee communication terminal is transmitted via the communication control server only when the communication data is of the specific type. In other cases, the communication data is transmitted directly to the callee communication terminal. This lightens the load on the communication control server for transmitting communication data.

Here, in the communication terminal, the transmission control unit may includes: an extraction sub-unit operable to, when the designated communication data is MPEG-encoded video data, extract an I picture from the video data; and an encryption sub-unit operable to encrypt the extracted I picture, the transfer ask unit may ask that the encrypted I picture be transferred to the callee communication terminal, and the transmission control unit may transmit the encrypted I picture to the communication control server, and transmit remaining video data excluding the I picture directly to the connected callee communication terminal.

Accordingly, only I pictures, which are essential in video data playback, are transmitted in an encrypted form to the callee communication terminal via the communication control server. Other structural elements of the video data are transmitted directly to the callee communication terminal without being encrypted. Therefore, the load in the callee communication terminal for decrypting encrypting data can be lightened. In addition, even if the video data is wrongfully acquired by a third party while being transmitted, the acquired video data will not be able to be wrongfully played back and viewed by the third party because the I pictures which are essential for video data playback are transmitted in an encrypted form.

Here, in the communication terminal, the data attributes may show whether or not the communication data is secret, the transfer ask unit, when the data attribute of the designated communication data shows that the designated communication data is secret, may ask the communication control server to transfer the designated data to the callee communication terminal, and the communication control unit, when the data attribute of the designated communication data shows that the designated communication data is secret, may encrypt the designated communication data, and transmit the encrypted designated communication data to the communication control server.

Accordingly, highly secret data is transmitted in an encrypted form via the communication control server to the callee communication terminal, and only data which is not secret is transmitted directly to the callee terminal. Therefore, by classifying the data recorded in the communication terminal in advance according to the level of secrecy, the user can transmit the data to a callee communication terminal with peace of mind, and without having to be concerned about secret data being wrongfully acquired and viewed by others.

Here, in the communication system, the notification control unit may further, before notifying the first communication terminal of the destination information of the second communication terminal, transmit a query message to the second communication terminal, the query message querying as to whether or not the second communication terminal is able to accept a connection from the first communication terminal, the second terminal may include: a reception unit operable to receive the query message; and a connection acceptability notification unit operable to determine, according to a load state upon receiving the query message, whether or not the connection from the first communication terminal is able to be accepted, and notify the communication control server of an acceptability notification message that shows a result of the determination, the notification control unit may include: a connection acceptability determination sub-unit operable to determine, based on the notified acceptability notificationmessage, whether or not the second communication terminal is in a state of being able to accept the connection from the first communication terminal, and when the second communication terminal is in a state of being able to accept the connection, the notification control unit notifies the first communication terminal of the destination information.

Furthermore, in the communication terminal, the identification information reception unit may further, before the connection acceptance request is transmitted, receive a query message from the communication control unit, the query message querying whether or not a connection from the communication terminal that requested the destination information is able to be accepted, and the connection control unit may determine whether or not the connection from the first communication terminal is able to be accepted according to a load state upon receiving the query message, and notify the communication control server of a result of the determination.

Accordingly, connection from other communication terminals is controlled according to the load on the user's communication terminal. This prevents communication problems caused by the communication terminal accepting connection from other communication terminals at times when the load is great.

Here, in the communication system, when the first communication terminal is determined not to be a connection-permitted terminal, the notification control unit may notify the first communication terminal of a notification message showing that the first communication terminal is not permitted to connect to the second communication terminal, and when the second communication terminal is in a state of being unable to accept the connection from the first communication terminal, the notification control unit may notify the first communication terminal that the second communication terminal is unable to accept the connection.

Accordingly, when a connection request source communication terminal is unable to connect to a connection request destination communication terminal, the cause is notified to the connection request source communication terminal. This enables the user to promptly know the reason for being unable to connect.

Here, in the communication terminal, the identification information reception unit, when the communication terminal is in a state of being unable to accept the connection from the communication terminal that requested the destination information, may receive a transfer ask notification message from the communication control server, the transfer ask notification message notifying that a communication data transfer ask has been made by the communication terminal that requested the destination information, and the communication terminal may include: a communication data acquirability determination unit operable to determine, according to a load state, whether or not the communication terminal has come to be in a state of being able to acquire the communication data; a transfer request message transmission unit operable to, when the communication terminal has come into a state of being able to acquire the communication data after the transfer ask notification message has been received, transmit a transfer request message that requests transfer of the communication data; and an acquisition unit operable to acquire the communication data transmitted from the communication control server in response to the transfer request message.

Accordingly, when the communication data cannot be transmitted directly because the callee communication terminal is not in a state of being able to accept connection, the communication control server can be asked to transfer the communication data. Therefore, processing for transmitting the communication data can be completed promptly without the communication terminal having to repeat processing for establishing a connection with the callee communication terminal.

### Brief Description of the Drawings

FIG. 1 is a functional block diagram showing the structure of the communication system 100 of the present invention;
FIG. 2 is a functional block diagram showing the structure of an intermediate server 101;
FIG. 3 shows specific examples of permitted-terminal registration commands transmitted to the intermediate server 101;
FIG. 4 shows a specific example of a permitted terminal table;
FIG. 5(a) shows a specific example of a query message;
FIG. 5(b) shows a shows an example of a notification message showing "connection accepted";
FIG. 5 (c) shows a shows an example of a notification message showing "connection denied";
FIG. 5(d) shows a specific example of a callee notification message;
FIG. 5(e) shows a specific example of an authentication information notification message;
FIG. 5(f) shows a specific example of a connection acceptance request message;
FIG. 5(g) shows an example of a variation of a notification message transmitted when a determination is negative at step S1205 in FIG. 12 and FIG. 16;
FIG. 5(h) shows an example of a variation of a notification message transmitted when a determination is negative at step S1608 of FIG. 16;
FIG. 6 is a functional block diagram showing the structure of an address resolution server 102;
FIG. 7 shows a specific example of an IP address correspondence table;
FIG. 8 is a flowchart showing operations for IP address transmission processing by the address resolution server 102 after receiving acquisition request data from the intermediate server 101;
FIG. 9 is a flowchart showing operations by each terminal for connection-permitted terminal registration request processing;
FIG. 10 is a flowchart showing operations by the intermediate server 101 for registration processing of a connection-permitted terminal to a permitted terminal table (step S1000 of FIG. 9);
FIG. 11 is a flowchart showing operations by terminals for connection establishment processing with another terminal;
FIG. 12 is a flowchart showing operations for connection control processing by the intermediate server 101 after receiving a query message transmitted at step S1101 of FIG. 11;
FIG. 13 is a flowchart showing operations for connection acceptance processing from another terminal by the terminal 104 that has received a connection acceptance request from the terminal 103 at step S1107 of FIG. 11;
FIG. 14 is a functional block diagram showing the structure of a communication system 110 in a second embodiment of the present invention;
FIG. 15 is a functional block diagram showing the structure of an intermediate server 111;
FIG. 16 is a flowchart showing operations for connection control processing by a control unit 211;
FIG. 17(a) shows a specific example of an acceptance state query message transmitted to a terminal 114 at step S1606 of FIG. 16;
FIG. 17 (b) shows a specific example of a response notification message that shows "in connection acceptable state" received from the terminal 114;
FIG. 17 (c) shows a specific example of a response notification message that shows "in connection denial state" received from the terminal 114;
FIG. 18 is a flowchart showing operations for connection acceptable state notification processing that the terminal 114 executes before performing the same processing as the connection acceptance processing shown in FIG. 13;
FIG. 19 is a flowchart showing operations for connection establishment determination processing by the intermediate server 111;
FIG. 20 is a functional block diagram showing the structure of a terminal 103 and a terminal 104;
FIG. 21 shows the structure of a communication system 200;
FIG. 22 is a flowchart showing operations for transfer processing of communication data between terminals by the intermediate server 101;
FIG. 23 is a flowchart showing operations for communication data transmission control processing by the terminals;
FIG. 24 is a functional block diagram showing the structure of a communication system 120 in a third embodiment;
FIG. 25 is a functional block diagram showing the structure of an intermediate server 121;
FIG. 26 and FIG. 27 show operations for connection control processing by a control unit 221;
FIG. 28 is a flowchart showing operations for communication data transfer ask processing by a terminal 123 after receiving a transfer ask query message transmitted by the intermediate server 121 according to processing at step S2611;
FIG. 29 is a flowchart showing operations for communication data acceptance control processing by a terminal 124 after receiving a transfer ask notification message transmitted by the intermediate server 121 according to processing at step S2615 of FIG. 27;
FIG. 30 is a functional block diagram showing the structure of the terminal 114;
FIG. 31 is a functional block diagram showing the structure of the terminal 123; and
FIG. 32 is a functional block diagram showing the structure of the terminal 124.

### Best Mode for Carrying Out the Invention

### First Embodiment

### Structure

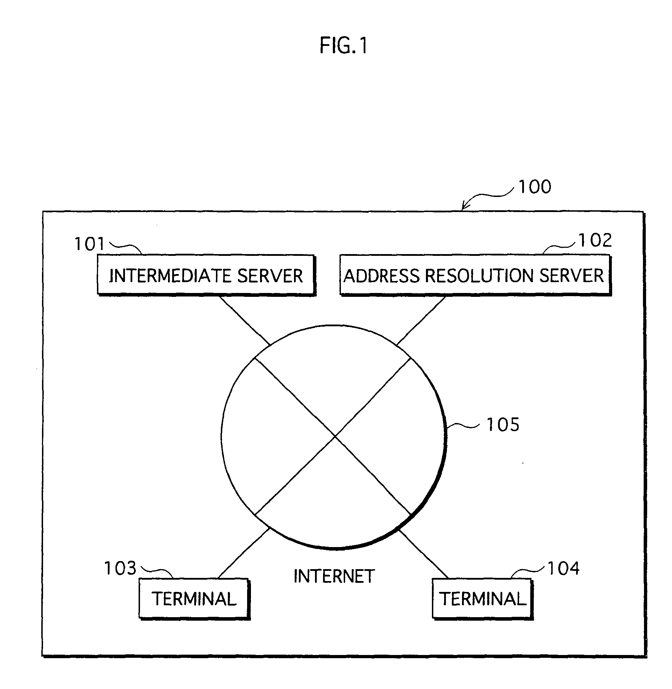

FIG. 1 is a functional block diagram showing the structure of a communication system 100 of the first embodiment of the present invention. The communication system 100 is composed of an intermediate server 101, address resolution server 102, a communication terminal 103 (hereinafter called "terminal 103"), and a communication terminal 104 (hereinafter called "terminal 104"), these compositional elements being connected over the Internet 105.

Note that instead of being connected over the Internet, the intermediate server 101 and the address resolution server 102 may instead have a structure of being connected to the same intranet (for example, a LAN).

Furthermore, while the number of communication terminals in the communication system 100 is given as two here for simplicity of explanation, the number is not limited to being to two: any plural number of terminals is possible.

Furthermore, terminal denotes a device that has an Internet or intranet connection function, specific examples of such a device including PCs (personal computers), HDDs (hard disk drives) video recorders, DVD recorders, TVs (televisions), and PDAs (personal digital assistants).

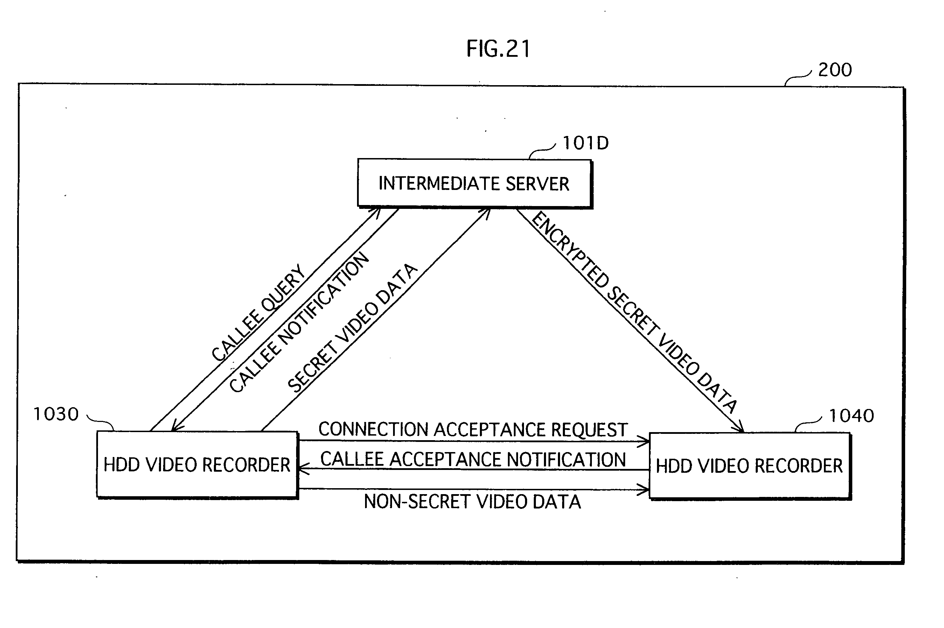

FIG. 21 shows a specific example of a communication system 200 in which the terminals in the communication system 100 are HDD video recorders. Note that since FIG. 21 is a simplified diagram of the communication system 100, the address determination server is not illustrated. The communication system 200 is composed of an HDD video recorder 1030 that is a connection request source, an HDD video recorder 104 0 that is a terminal which is a connection destination, and an intermediate server 1010.

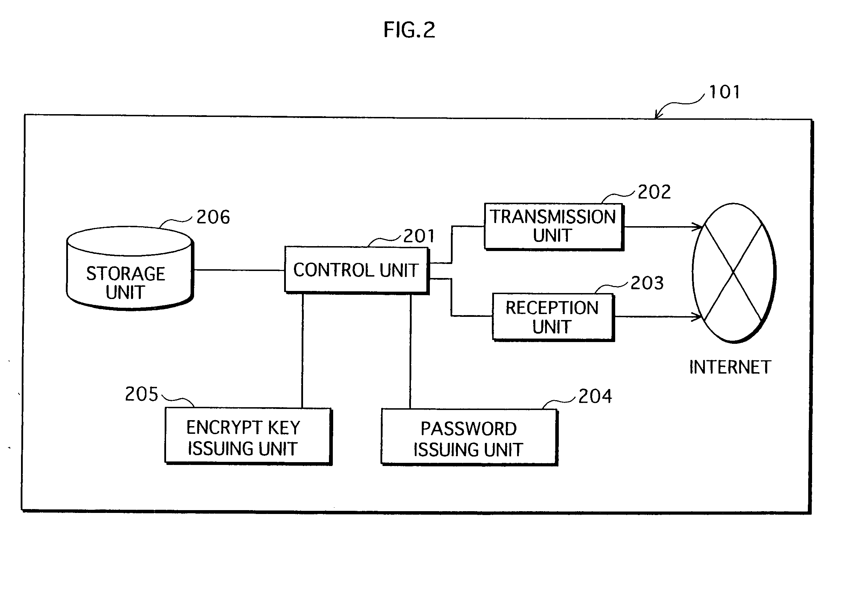

FIG. 2 is a functional block diagram showing the structure of the intermediate server 101.

The intermediate server 101 is composed of a control unit 201, a transmission unit 202, a reception unit 203, password issuing unit 204, an encrypt key issuing unit 205, and a storage unit 206.

In terms of hardware, the intermediate server 101 is composed of a CPU, a ROM, a RAM, a hard disk, and the like. Computer programs are stored in the ROM or the hard disk, and the intermediate server 101 achieves its functions by the CPU operating according to the computer programs.

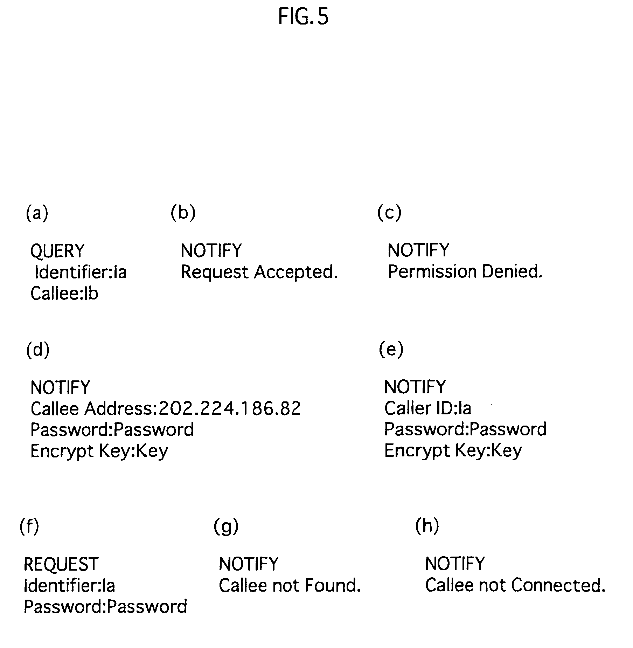

The reception unit 203 receives query messages transmitted from terminals and outputs the received query messages to the control unit 201. A query message is a message for making a query as to the IP address of a terminal that is a connection destination (hereinafter called a "callee terminal"). The identifier of the terminal making the query is specified in the query message. FIG. 5(a) showsaspecific example of a query message.

Here, "QUERY" shows that the message is a query message, "Identifier" shows the identifier of the terminal that is the transmission source of the query message (hereinafter called "query terminal"), and "Callee" is the identifier of the callee terminal.

The reception unit 203 also receives registration request data transmitted from terminals, and outputs the registration request data to the control unit 201.

Here, "registration request data" is packet data that includes a permitted-terminal registration command and the IP address of the intermediate server 101. The permitted-terminal registration command is created by a terminal, and is a request to register a terminal permitted to connect to the terminal that created the command (hereinafter a terminal permitted to connect to another terminal is called a "connection-permitted terminal"), or to delete a registered connection-permitted terminal.

Here, the permitted-terminal registration command includes the identifier of the terminal that requested the registration, the identifier of the connection-permitted terminal that the terminal is requesting to register or delete, and a command showing contents of the registration processing.

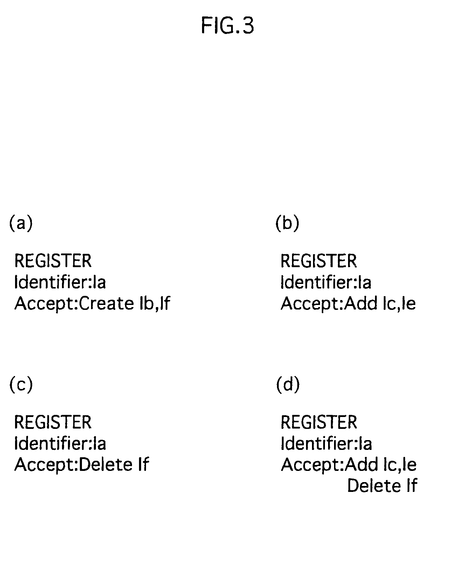

FIG. 3 shows specific examples of permitted-terminal registration commands transmitted to the intermediate server 101. FIG. 3 (a) shows a specific example of a command message in the case of newly registering terminals. "REGISTER" shows that the command expresses registration processing, "Identifier" shows the identifiers of terminals that are permitted to be connected, "Accept" shows specif ic processing contents to be performed by the intermediate server 101 in the registration processing with a statement that follows "Accept" (here the statement includes "Create"). "Create" expresses a command for newly registering a connection-permitted terminal, and here the statement including "Create" expresses deleting the identifiers of connection-permitted terminals that are already registered and newly registering connection-permitted terminals having identifiers Ib and If.

"Add" in FIG. 3(b) expresses a command for newly adding identifiers of connection-permitted terminals in addition to identifiers of connection-permitted terminals already registered. Here, the statement including "Add" expresses a command for additionally registering terminals having identifiers Ic and Ie as connection-permitted terminals.

"Delete" in FIG. 3(c) expresses a command for removing a specified identifier from the identifiers of the connection-permitted terminals already registered and deleting connection permission. Here, the statement including "Delete" expresses a command for deleting the identifier If from among the identifiers of the connection-permitted terminals already registered. Note that the commands "Add" in FIG. 3(b) and "Delete" in FIG. 3(c) may be one command such as shown in FIG. 3(d).

The transmission unit 202 transmits an authentication information notification message, which is input from the control unit 201, to a callee terminal.

Here, "authentication information notification message" denotes a message that includes information used by a terminal that has received a request for connection acceptance to authenticate the query terminal. Specifically, an authentication information notification message is a message that is created by the control unit 201 and includes a query terminal identifier, a password for authenticating the terminal that has received the request, and an encrypt key for encrypting and decrypting communication data that is transmitted between terminals.

Here, "communication data" denotes various types of data transmitted and received between terminals, such as video data, image data, audio data, and text data.

FIG. 5(e) shows a specific example of an authentication information notification message.

Here, "NOTIFY" shows a that the message is a notification message, "Caller ID" shows the identifier of a query terminal, "Password" shows the password, and "Encrypt Key" shows the encrypt key.

The transmission unit 202 also transmits callee notification messages from the control unit 201 to the query terminal.

Here, "callee notification message" denotes a message used to notify the IP address of the callee terminal to the query terminal. Specifically, a callee notification message is a message that is created by the control unit 201, and includes the callee terminal IP address that the query terminal queried, a password for authenticating the query terminal, and an encrypt key for encryption and decryption of communication data transmitted between the callee terminal and the query terminal.

FIG. 5(d) shows a specific example of a callee notification message.

Here, "NOTIFY" shows that the message is a notification message, "Callee Address" shows the IP address of the callee terminal, "Password" shows the password, and "Encrypt Key" shows the encryption key.

In addition, the transmission unit 202 transmits packet data to the address resolution server 102. This packet data is input from the control unit 201, and includes an acquisition request command for requesting acquisition of the IP address of the callee terminal whose identifier is specified, the IP address of the intermediate server 101 and the IP address of the address resolution server 102. Hereinafter, this packet data is referred to as "acquisition request data".

The password issuing unit 204 issues a character string that is the password, based on a password issue instruction from the control unit 201.

Here, the character string issued as the password is a string of upper and lower case letters, numbers, symbols, or a combination of these. A different character string is issued each time. For instance, the password issuing unit 204 may arbitrarily select and issue one character string as the password from a list of character strings that are random combinations of upper and lower case letters, numbers, symbols, or the like.

The encrypt key issuing unit 205 issues an encrypt key used for encrypting and decrypting of data, according to an encrypt key issuing instruction from the control unit 201.

Here, it is assumed that the encrypt key issuing unit 205 issues a encrypt key according to shared key encryption in which identical encrypt keys are used to encrypt data to be transmitted and to decrypt the encrypted data at the reception-side.

The storage unit 206 is composed of a hard disk, a flash memory, or the like, and stores a permitted terminal table, an allowable communication data size threshold value, the computer programs, the address of the address resolution server 102, and so on.

Here, "permitted terminal table" denotes a table showing correlation between each terminal and terminals that are permitted to connect to the terminal, registered as such by the control unit 201 in response to registration requests from respective terminals.

Furthermore, "allowable communication data size threshold" denotes a threshold value of an allowable size of communication data. This is used for determining whether or not to accept communication data transmitted from a terminal in communication data transfer processing described later.

Furthermore, "address" denotes, for example, a URL (Uniform Resource Locator), an IP address, or the like.

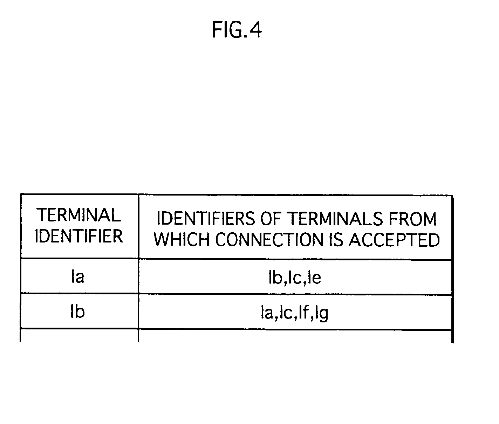

FIG. 4 shows a specific example of the permitted terminal table. The example shown in FIG. 4 shows that connection to the terminal having the identifier Ia is permitted from terminals having identifiers Ib, Ic, and Ie, and that connection to the terminal having the identifier Ib is permitted from terminals having identifiers Ia, Ic, If, and Ig.

The control unit 201 controls operation of the other compositional elements by reading and executing the computer programs stored in the storage unit 206, and performs processing for registering connection-permitted terminals to the permitted terminal table, processing for controlling connection between terminals, and processing for transferring communication data between terminals.

The following describes in detail the aforementioned three types of processing performed by the control unit 201.

### (1) Processing for registering connection-permitted terminals to the permitted terminal table

On receiving input of registration request data from the reception unit 202, the control unit 201 extracts the permitted-terminal registration command from the registration request data, and analyzes the contents of the extracted permitted-terminal registration command. Having detected a "REGISTER" command, the control unit 201 recognizes that execution of registration processing is being instructed, and executes processing contents instructed by the permitted-terminal registration command (the command instructed by the statement after Accept).

Specifically, when the processing contents are shown by a statement that includes "Create", the control unit 201 refers to the permitted terminal table to judge whether or not the terminal requesting registration is already registered. When the terminal is not already registered, the control unit 201 newly registers the identifier of the terminal in the permitted terminal table in correspondence with the identifier the connection-permitted terminal that made the registration request. When the terminal is already registered, the control unit 201 deletes registered connection-permitted terminal identifiers from the permitted terminal table, and newly registers the identifier of the connection-permitted terminal by which the request for registration is being made in the permitted terminal table.

When the processing contents are shown by a statement that includes "Add", the control unit 201 adds the identifier of the connection-permitted terminal by which the request to be registered is being made in the permitted terminal table, without deleting the connection-permitted terminals, even if identifiers of other connection-permitted terminals are already registered in the permitted terminal table.

When the processing contents are shown by a statement that includes "Delete", the control unit 201 deletes the identifier of the connection-permitted terminal for which the delete request was made.

When execution of the described processing contents has ended, the control unit 201 creates a registration result message showing whether or not the registration processing was successful, and transmits the message via the transmission unit 202 to the terminal that made the registration request. As one example, if the registration processing was successful, the control unit 201 creates a message showing "registration complete" (hereinafter called "registration completion message"), and if the registration processing failed, the control unit 201 creates a message showing "registration failed" (hereinafter called "registration failure message"). Note that the control unit 201 may create the message showing registration completion in the processing state code, or both a character string and the processing state code.

### (2) Connection control processing

On receiving input of a query message from the reception unit 203, the control unit 201 specifies the one or more identifiers of one or more connection-permitted terminals in correspondence with the identifier of the callee terminal specified in the query message, by referring to the permitted terminal table stored in the storage unit 206. According to whether the one of the specified identifiers matches the identifier of the query terminal, the control unit 201 determines whether or not the query terminal is a terminal that is permitted to connect to the callee terminal, and transmits a notification message notifying the determination result to the query terminal.

FIG. 5 (b) and FIG. 5 (c) show specific examples of notification messages transmitted to the query terminal. FIG. 5 (b) shows an example of a notification message showing "connection accepted", and FIG. 5(c) shows an example of a notification message showing "connection denied".

When the query terminal is a terminal that is permitted to connect the callee terminal, the control unit 201 transmits acquisition request data to the address resolution server 102 via the transmission unit 202, and, on acquiring the IP address of the callee terminal from the address resolution server 102, transmits a notification message showing "connection accepted" to the query terminal.

Next, the control unit 201 instructs the password issuing unit 204 to issue a password and the encrypt key issuing unit 205 to issue an encrypt key, and creates an authentication information notification message from the query terminal identifier, and the password and the encrypt key generated respectively by the password issuing unit 204 and the encrypt key generation unit 205 in response to the instructions. The control unit 201 then transmits the created authentication information notification message to the callee terminal via the transmission unit 202.

Next, the control unit 201 creates a callee notificationmessage from the issued password and encrypt key, and the obtained IP address of the callee terminal, and transmits the created callee notification message to the query terminal via the transmission unit 202.

When the query terminal is not a terminal that is permitted to connect to the callee terminal, the control unit 201 transmits a notification message showing "connection denied" to the query terminal.

### (3) Transfer processing of communication data between terminals

On receiving a communication data transfer notification message from the reception unit 203, the control unit 201 determines whether the size of the communication data exceeds the allowed communication data size threshold, based on data size information included in the communication data ask message. When the data size does not exceed the allowed communication data size threshold, the control unit 201 creates a transfer acceptance notification message showing "acceptance of communication data permitted" , and transmits the transfer acceptance notification message to the transfer ask source terminal via the transmission unit 202. Having received, via the reception unit 203, encrypted communication data transmitted by the terminal in response to the transfer acceptance notification message, the control unit 201 transmits the encrypted communication data to the callee terminal via the transmission unit 202.

Here, "communication data transfer message" denotes a message that, when communication data to be transmitted from the transmission source terminal to the callee terminal is highly secret, is transmitted from the transmission source terminal (here, the callee) to the intermediate server 101 in order to ask the intermediate server 101 to transmit the communication data. Specifically, the communication data transfer message includes the identifier of the query terminal, the identifier of the callee terminal, data size information of the communication data, and the IP address of the intermediate server 101.

Furthermore, "transfer acceptance notification message" denotes a message that, when an acceptance request is made from a terminal that is a communication data transmission source, is notified from the intermediate server 101 or the callee terminal to the transmission source terminal, and shows whether or not acceptance of communication data is permitted. Specifically, the transfer acceptance notification message includes an identifier showing that the message is a notification message, the notification contents, the identifier of the notification source, and the IP address of the transmission source terminal.

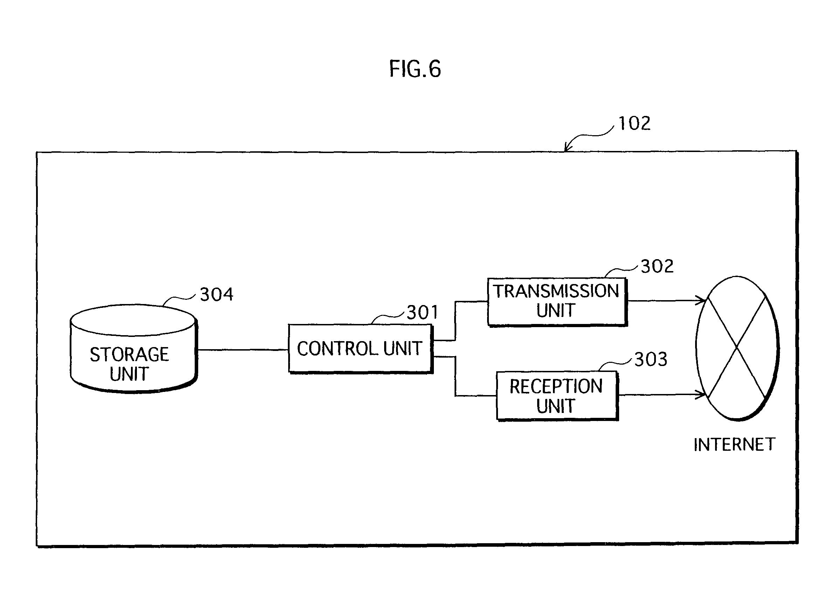

The following describes the address resolution server 102. FIG. 6 is a functional block drawing of the address resolution server 102.

The address resolution server 102 is composed of a control unit 301, a transmission unit 302, a reception unit 303, and a storage unit 304.

In terms of hardware, the address resolution server 102 is composed of a CPU, a ROM, a RAM, a hard disk, and the like. Computer programs are stored in the ROM or the hard disk, and the address resolution server 102 achieves its functions by the CPU operating according to the computer programs.

The transmission unit 302 transmits packet data input from the control unit 301 to the intermediate server 101. This packet data includes the IP address of the callee terminal and the IP address of the intermediate server 101. Hereinafter, this packet data is referred to as "Callee IP address data".

The reception unit 303 receives acquisition request data transmitted by the intermediate server 101, and packet data transmitted from terminals connected to the Internet. This packet data includes the IP address and identifier of the terminal and the IP address of the address resolution server 102. Hereinafter, this packet data is referred to as "connected-terminal IP address data". The reception unit 303 outputs the received acquisition request data and connected-terminal IP address data to the control unit 301.

The storage unit 304 is composed of a hard disk, a flash memory, or the like, and stores an IP address correspondence table, programs executed by the control unit 301, and so on.

Here, "IP address correspondence table" denotes a table showing correlation between terminals connected to the Internet and the IP address assigned respectively to each terminal.

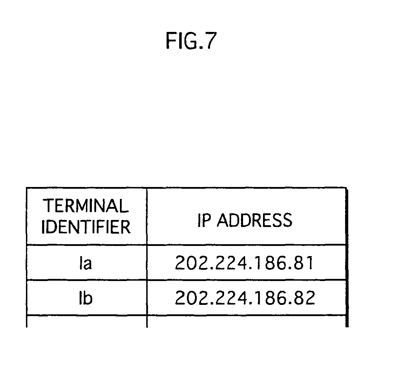

FIG. 7 shows a specific example of the IP address correspondence table. The example in FIG. 7 shows that terminals with respective identifiers Ia and Ib are connected to the Internet, the terminal whose identifier is Ia is assigned an IP address 202.224.186.81 and the terminal whose identifier is Ib is assigned an IP address 202.224.186.82.

On receiving input of connected-terminal IP address data from the reception unit 303, the control unit 301 extracts the IP address and identifier of the terminal from the IP address data, and registers the extracted IP address and identifier in correspondence in the IP address correspondence table.

Furthermore, on receiving input of acquisition request data from the reception unit 303, the control unit 301 extracts the identifier of the callee terminal from the acquisition request data, and refers to the IP address correspondence table stored in the storage unit 304 to specify the IP address corresponding to the identifier. The control unit 301 then creates callee IP address data from the specified IP address and the IP address of the intermediate server 101, and transmits the created callee IP address data to the intermediate server 101 via the transmission unit 302.

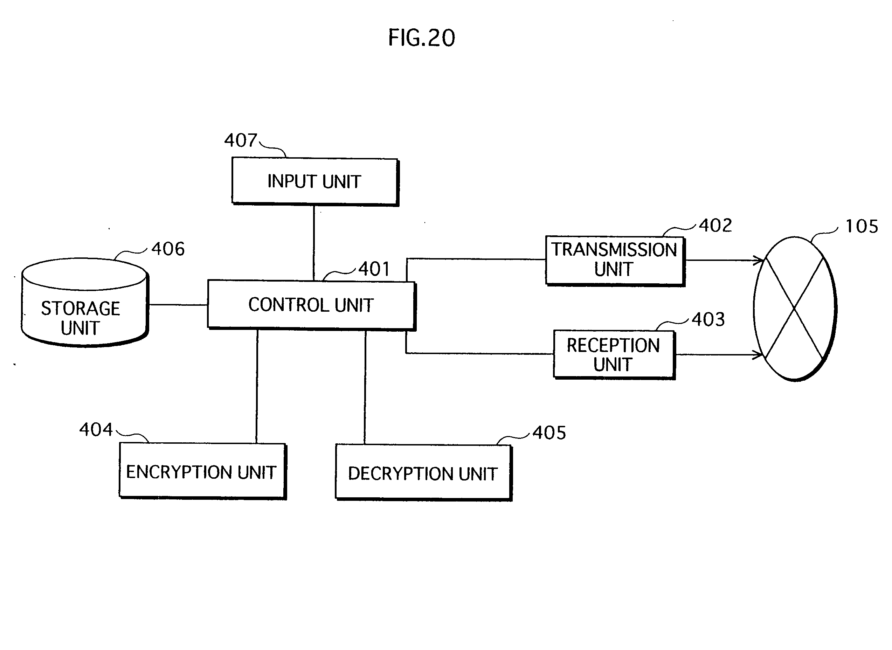

Next, the terminal 103 and the terminal 104 are described. The two terminals are identical in structure, FIG. 20 being a functional block diagram showing the structure. Each terminal is composed of a control unit 401, a transmission unit 402, a reception unit 403, an encryption unit 404, a decryption unit 405, a storage unit 406, and an input unit 407.

In terms of hardware, each terminal is composed of a CPU, a ROM, a RAM, a hard disk, and the like. Computer programs are stored in the ROM or the hard disk, and the terminal achieves its functions by the CPU operating according to the computer programs.

Each terminal pre-stores, in the storage unit 406, addresses of the intermediate server 101 and the address resolution server 102, various types of communication data such as video data, image data, audio data, and text data, a communication data secrecy determination table, and so on.

Here, "communication data secrecy determination table" denotes a table showing correlation between various communication data and secrecy determination identifiers that showwhether or not respective communication data is secret.

Note that it is assumed that communication data is determined to be secret or not, for example, by instruction from the user via the input unit 407 at the time of recording the communication data, and that the control unit 401 sets the communication data secrecy identifiers in the communication data secrecy table in accordance with the user instruction.

Each terminal, on connecting to the Internet, transmits the IP address assigned by a provider server (not illustrated) and the terminal identifier to the address resolution server 102 via the transmission unit 402.

In addition, each terminal performs connection-permitted-terminal registration processing, connection establishment processing with other terminals,connection acceptance processing of connection from other terminals, and communication data transmission control processing after establishing connection with another terminal. The following describes each processing in detail.

### (1) Connection-permitted terminal registration request processing

The control unit 401 creates registration request data based on an identifier a connection-permitted terminal input from the input unit 407 by the user and the IP address of the intermediate server 101, and transmits the created registration request data to the intermediate server 101. On receiving, from the intermediate server 101 via the reception unit 403, a registration result message showing whether or not registration processing for registering the connection-permitted terminal in the permitted terminal table was successful, the control unit 401 ends the processing.

### (2) Connection establishment processing with other terminals

On receiving, from the user via the input unit 407, input of a query instruction with respect to an IP address of a terminal that is to be a callee, the control unit 401 transmits a query message to the intermediate server 101 via the transmission unit 402, and receives a notification message transmitted by the intermediate server 101 via the reception unit 403.

When the notification message shows "connection denied", the control unit 401 ends the processing. When the notification message shows "connection accepted", the control unit further receives a callee notification message from the intermediate server 101 via the reception unit 403.

Next, the control unit 401 creates a connection acceptance request message using the password included in the callee notification message received from the reception unit 403 and the terminal identifier, and encrypts the created connection acceptance request message via the encryption unit 404 using the encrypt key included in the received callee notification message. The control unit 401 then transmits the encrypted connection acceptance request message to the callee terminal via the transmission unit 402, to make a connection acceptance request.

FIG. 5(f) shows a specific example of a connection acceptance request message. "REQUEST" shows that the message is a connection acceptance request message, "Identifier" shows the identifier of the terminal making the request, and "Password" is the passwordwritten in the connection acceptance message.

Furthermore, on receiving a notification message showing a determination result of whether the connection is accepted from the callee terminal, the control unit 401 interprets the contents of the notification message, and determines whether the connection is accepted.

When the notification message shows "connection denied", the control unit 401 ends the processing. When the notification message shows "connection accepted", the control unit 401 commences data communication with the callee terminal, and performs communication data transmission control processing described later.

### (3) Connection acceptance processing of connection from other terminals

On receiving an authentication information notification message from the intermediate server 101, the control unit 401 acquires the query terminal identifier, the password, and the encrypt key from the authentication information notification message.

Furthermore, on receiving a connection acceptance request message from another terminal via the reception unit 403, the control unit 401 decrypts the connection acceptance request message via the encryption unit 405 using the acquired encrypt key, and acquires the terminal identifier and password from the connection acceptance request message. The control unit 401 then compares the acquired identifier and password respectively with the identifier and password acquired earlier from the authentication information notification message.

When both the identifiers and the passwords match, the control unit 401 creates a notificationmessage showing "connection accepted", encrypts the notification message via the encryption unit 404 using the acquired encryption key, transmits the encrypted notification message via the transmission unit 402 to the terminal that made the connection acceptance request, and commences data communication with the terminal.

When the identifiers or the passwords do not match, the control unit 401 creates a notification message showing "connection denied", transmits the notification message via the transmission unit 402 to the terminal that made the connection acceptance request, and ends communication with the terminal.

### (4) Communication data transmission control processing

On receiving a designation of communication data to be transmitted to a callee terminal from the user via the input unit 407, the control unit 401 reads the designated communication data from the storage unit 406, and refers to the communication data secrecy determination table stored in the storage unit 406 to determine whether the designated communication data is secret. When the communication data is secret, the control unit 401 creates a communication data transfer notification message, and transmits the communication data transfer notification message to the intermediate server 101 and the callee terminal. Next, on receiving a transfer acceptance notification message indicating "communication data acceptance permitted" from the intermediate server 101 and the callee terminal via the reception unit 403, the control unit 401 encrypts the designated communication data using the encrypt key included in the callee notification message received via the reception unit 403, and transmits the encrypted communication data to the intermediate server 101 via the transmission unit 402.

When the designated communication data is not secret data, the control unit 401 transmits the read communication data directly to the callee terminal without encrypting the communication data.

As one example, using the communication system 200 shown in FIG. 21, a user can transmit video data of an athletics meet that is recorded in a hard disk video recorder to the hard disk video recorder at the home of a relative or grandparent, over the Internet via the intermediate server in an encrypted form. This enables relatives or grandparents living in a distant location to enjoy recorded video without the risk of the transmitted video data being decoded by another party during the transmission process.

Furthermore, when viewing of communication data by other parties poses no particular problem, such as in the case of a recorded TV programs, the communication data can be transmitted directly to a connected HDD recorder, and the recorded TV program enjoyed by the relatives or grandparents.

### Operations

First a description is given of operations for IP address transmission processing by the address response server 102 after having received acquisition request data from the intermediate server 101.

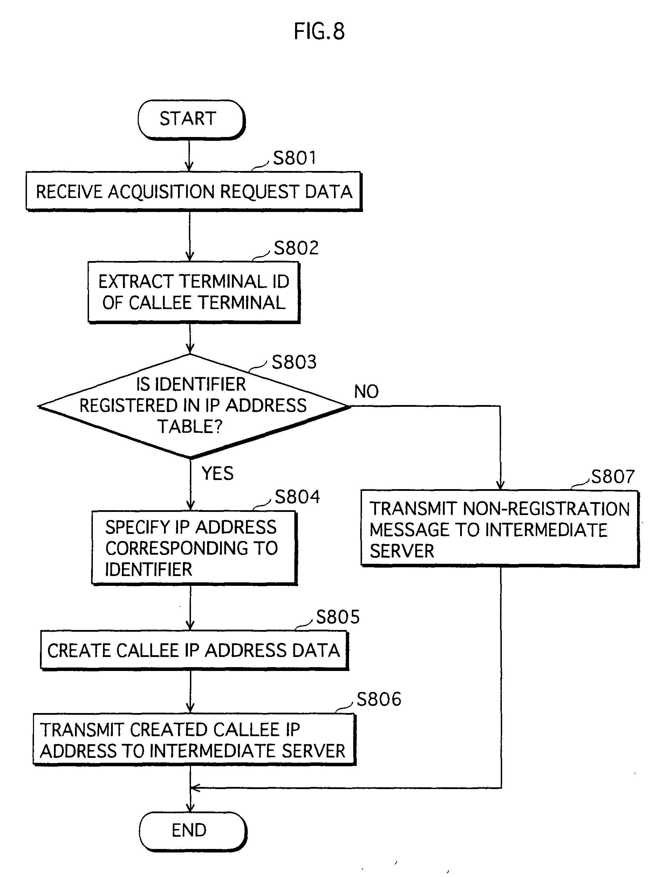

FIG. 8 is a flowchart showing the operations. The following describes the operations with reference to FIG. 8.

The reception unit 303, on receiving acquisition request data from the intermediate server 101 (step S801), outputs the received acquisition request data to the control unit 301.

On receiving input of the obtain request data from the reception unit 303, the control unit 301 extracts the callee terminal identifier from the acquisition request data (step S802), and refers to the IP address table stored in the storage unit 304 to determine whether or not the identifier is registered in the IP address table (step S803).

When the identifier is registered in the IP address table (step S803: Y), the control unit 301 specifies, from the IP address table, the IP address corresponding to the identifier (step S804), and creates callee IP address data from the IP address and the IP address of the intermediate server 101 (step S805). The control unit 301 then transmits the created callee IP address data to the transmission unit 302 via the intermediate server 101 (step S806).

When the identifier is not registered in the IP address table (step S803: N), the control unit 301 creates a messaged indicating "not registered" (hereinafter called "non-registration message"), and transmits the non-registration message via the transmission unit 302 to the intermediate server 101 (step S807).

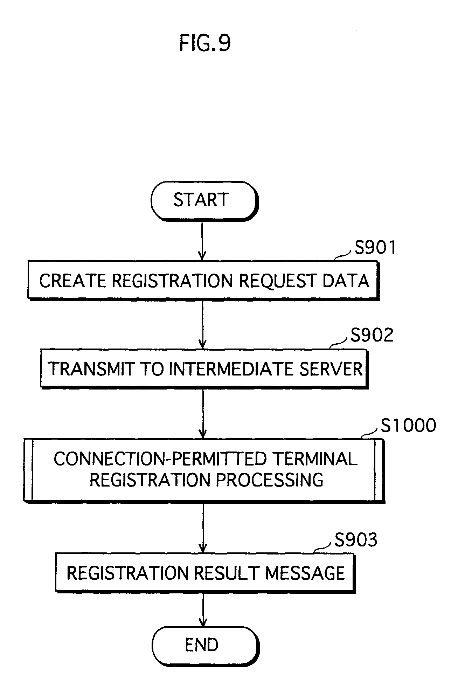

Next, a description is given of the operations for connection-permitted terminal registration request processing performed by the terminals. FIG. 9 is a flowchart showing the operations. The following describes the operations with reference to FIG. 9.

Note that for brevity, the operations are described in terms of the terminal 104 making a request to register the terminal 103 as a connection-permitted terminal.

The terminal 104 creates registration request data (step S901), and transmits the created registration request data to the intermediate server 101 (step S902). This causes the intermediate server 101 to commence registration processing for registering the connection-permitted terminal (the terminal 10 3 here) to the permitted terminal table (step S1000), and when the registration processing has finished, the terminal 104 receives a registration result message from the intermediate server 101 (step S903).

Next a description is given of operations in the registration processing by the intermediate server 101 for registering a connection-permitted terminal to the permitted terminal table (step S1000).

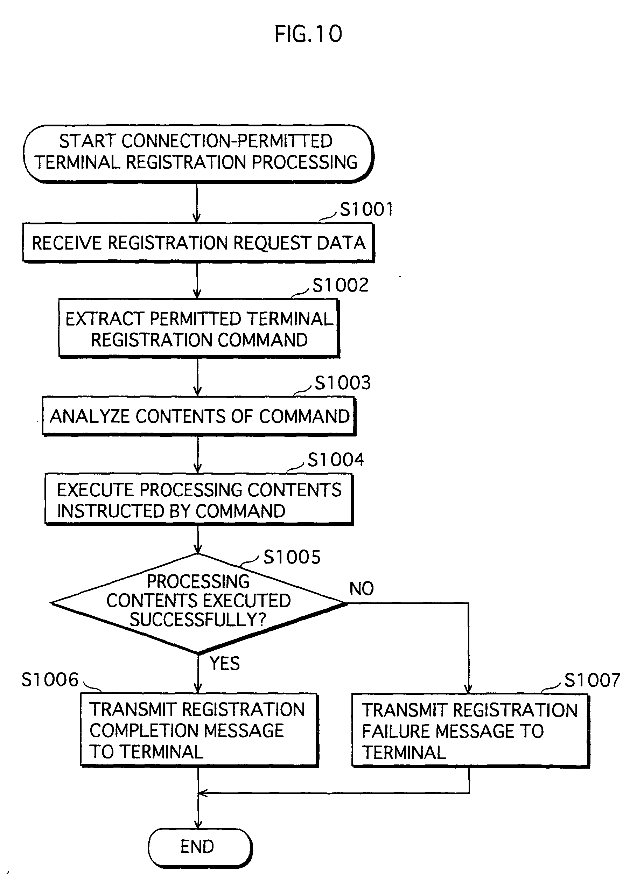

FIG. 10 is a flowchart showing the operations. The following describes the operations with reference to FIG. 10.

On receiving registration request data from the terminal 104 (step S1001), the reception unit 203 outputs the received registration request data to the control unit 201.

On receiving input of the registration request data from the reception unit 203, the control unit 201 extracts the permitted-terminal registration command from the registration request data (step S1002), and analyzes the contents of the extracted permitted-terminal registration command (step S1003). Having recognized that execution of registration processing is being instructed, the control unit 201 executes the processing contents instructed by the permitted-terminal registration command (step S1004), and determines whether or not execution of the processing contents succeeded (step S1005).

When execution has succeeded (step S1005: Y), the control unit 201 creates a registration completion message, and transmits the registration completion message to the terminal 104 via the transmission unit 202 (step S1006). When execution has failed (step S1005: N), the control unit 201 creates a registration failure message, and transmits the registration failure message to the terminal 104 via the transmission unit 202 (step S1007).

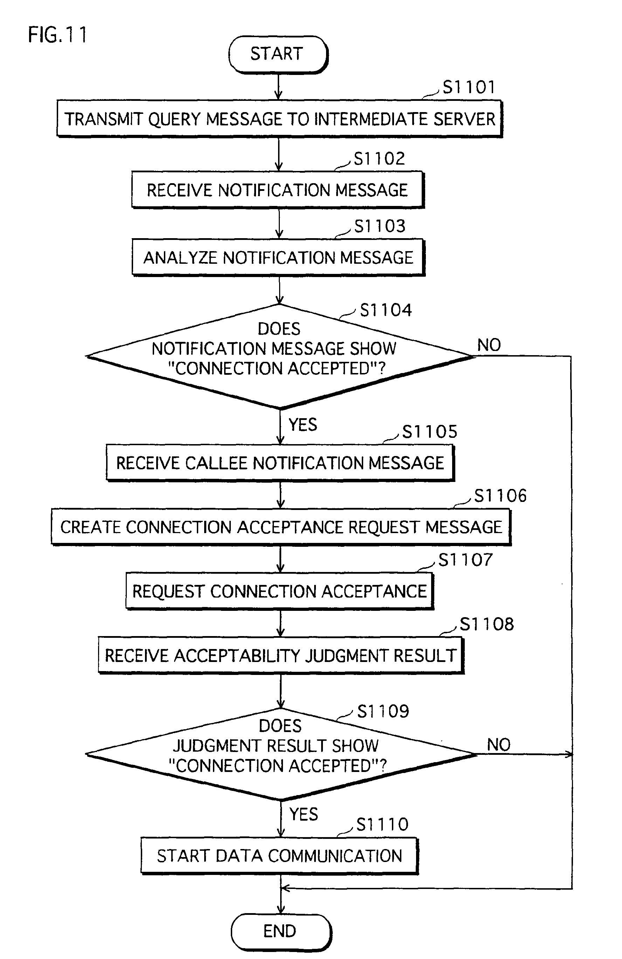

Next, a description is given of operations by the terminals for connection establishment processing with other terminals. FIG. 11 is a flowchart showing the operations. The following describes the operations with reference to FIG. 11.

Note that for brevity, the operations are described in terms of the terminal 103 establishing a connection with the terminal 104.

The terminal 103 transmits a query message for making a query to the intermediate server 101 as to the address of the terminal 104 (step S1101).

On receiving a notification message from the intermediate server 101 as a response to the query message (step S1102), the terminal 103 analyzes the contents of the notification message (step S1103), and determines whether or not the notification message shows "connection accepted" (step S1104).

When the notification message shows "connection denied" (step S1104 : N), the terminal 103 ends the processing. When the notification message shows "connection accepted" (step S1104: Y), the terminal 103 further receives a callee notification message (step S1105), and creates a connection acceptance request message using the password included in the received callee notification message and the identifier of the terminal 103 (step S1106) . The terminal 103 then encrypts the created connection acceptance request message using the encrypt key included in the received callee notification message, and transmits the connection acceptance request message to the terminal 104 to makes a connection acceptance request to the terminal 104 (step S1107). On receiving a notification message showing a judgment result of whether or not acceptance is permitted from the terminal 104 (step S1108), the terminal 103 analyzes the contents of the notification message, and determines whether or not the connection acceptance is permitted (step S1109).

When the notification message shows "connection denied" (step S1109: N), the terminal 103endstheprocessing. When the notification message shows "connection accepted" (step S1109: Y), the terminal 103 commences data communication with the terminal 104 (step S1110) .

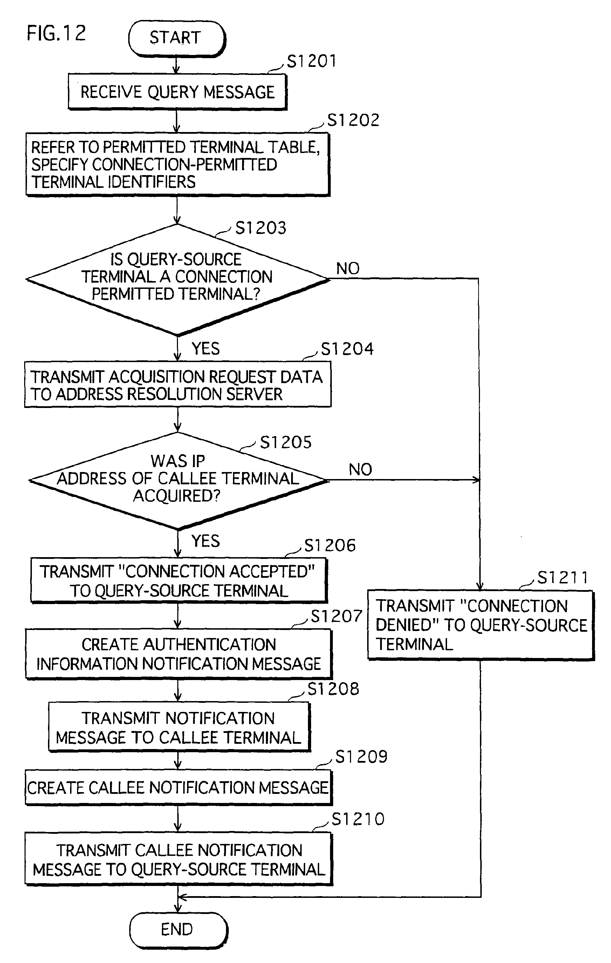

Next, a description is given of operations by the intermediate server 101 at step S1101 in connection control processing when having received a query message. FIG. 12 is a flowchart showing the operations. The following describes the operations with reference to FIG. 12.

On receiving a query message transmitted by the terminal 103 (step S1201), the reception unit 203 outputs the query message to the control unit 201.

On receiving input of the query message from the reception unit 203, the control unit 201 specifies the connection-permitted terminal identifiers in correspondence with the identifier of the terminal 104 that is specified in the query message, by referring to the permitted terminal table stored in the storage unit 206 (step S1202). The control unit 201 then determines whether the terminal 103 is a terminal permitted to connect to the terminal 104 according to whether or not any of the specified identifiers match the identifier of the terminal 103 (step S1203).

When the terminal 103 is a terminal permitted to connect to the terminal 104 (step S1203: Y), the control unit 201 transmits acquisition request data to the address resolution server 102 via the transmission unit 202 (step S1204). This causes the address resolution server 102 to perform the processing at step S801 to step S807 shown in FIG. 8, and the control unit 201 then determines whether or not the IP address of the terminal 104 has been acquired from the address determination server 102 (step S1205).

When the IP address has been acquired (step S1205: Y), the control unit 201 transmits a notification message showing "connection accepted" via the transmission unit 202 to the terminal 103 (step S1206), causing the terminal 103 to perform the processing at step S1102 onwards in FIG. 11.

Furthermore, the control unit 201 gives a password issue instruction to the password issuing unit 204 and an encrypt key issuing instruction to the encrypt key issuing unit 205, and creates an authentication information notification message from the identifier of the query terminal 103 and the password and encryption key issued respectively by the password issuing unit 204 and the encrypt key issuing unit 205 in response to the instructions (step S1207). The control unit 201 then transmits the created authentication information notification message via the transmission unit 202 to the terminal 104 (step S1208).

Next, the control unit 201 creates a callee notificationmessage from the issued password and encrypt key and the obtained IP address of the terminal 104 (step S1209), and transmits the callee notification message via the transmission unit 202 to the terminal 103 (step S1210) .

At step S1203, when the terminal 103 is not a terminal permitted to connect to the terminal 104 (step S1203: N), or at step S1205, when a non-registration message is received from the address resolution server 102 and the IP address of the terminal 104 was unable to be received (step S1205: N), the control unit 201 transmits a notification message showing "connection denied" to the terminal 103 (step S1211).

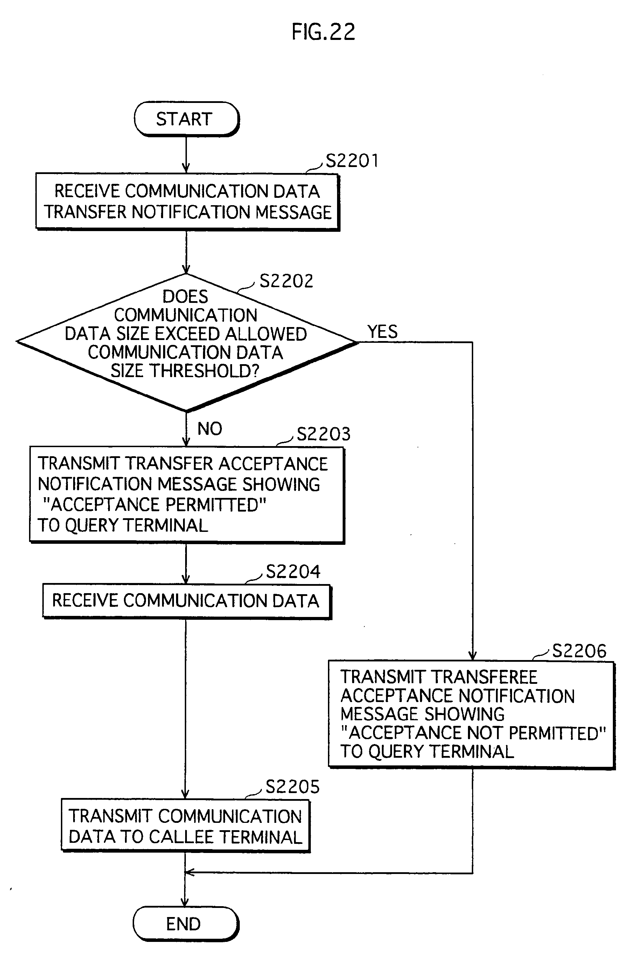

Next, a description is given of operations by the intermediate server 101 in transfer processing for transferring communication data between terminals. FIG. 22 is a flowchart showing the operations. The following describes the operations with reference to FIG. 22.

On receiving a communication data transfer notification message from the reception unit 203 (step S2201), the control unit 201 determines whether or not the size of the communication data exceeds the allowed communication data size threshold, based on the communication data size information included in the communication data transfer notification message (step S2202).

When the size does not exceed the threshold (step S2202: N), the control unit 201 creates a transfer acceptance notification message showing "communication data acceptance permitted", and transmits the transfer acceptance notification message to the query terminal via the transmission unit 202 (step S2203). On receiving encrypted communication data via the reception unit 203 from the terminal in response to the transfer acceptance notification message (step S2204), the control unit 201 transmits the received encrypted communication data to the callee terminal via the transmission unit 202 (step S2205).

When the size of the communication data exceeds the allowed communication data size at step S2202 (step S2202 : Y), the control unit 201 creates a transfer acceptance notification message showing "communication data acceptance not permitted", and transmits the transfer acceptance notification message to the query terminal via the transmission unit 202 (step S2202).

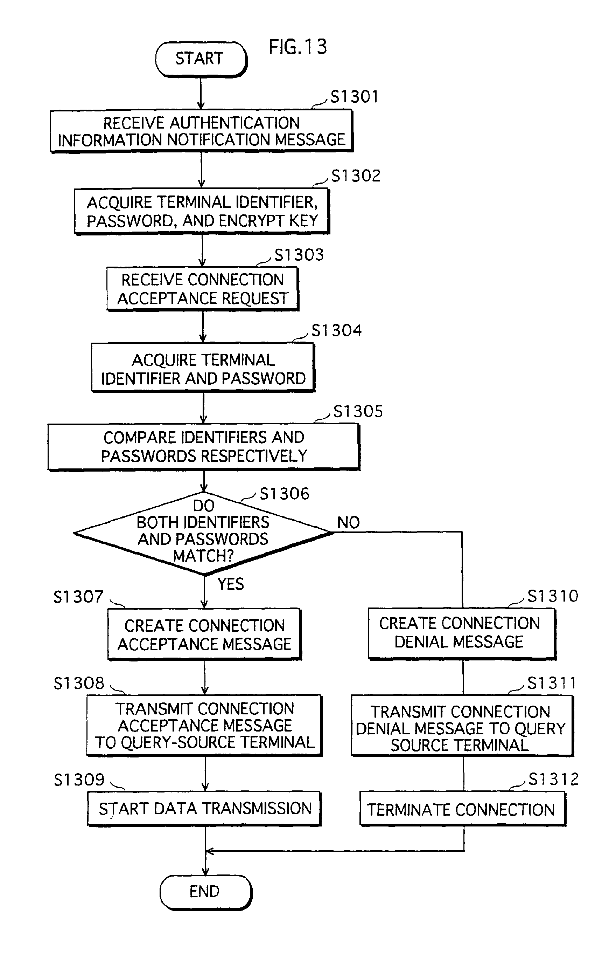

Next, a description is given of operations for connection acceptance processing of a connectionfrom another terminal,performed at step S1107 of FIG. 11 by the terminal 104 to which a connection acceptance request has been made by the terminal 103. FIG. 13 is a flowchart of the operations. The operation are described with use of FIG. 13.

Before receiving the connection acceptance request from the terminal 103, on receiving an authentication information notification message from the intermediate server 101 at step S1208 in FIG. 12 (step S1301), the terminal 104 acquires the identifier of the terminal 103 and the password and encrypt key from the authentication information notification message (step S1302).

Furthermore, when receiving a connection acceptance request from the terminal 103 by receiving a connection acceptance request message (step S1303), the terminal 104 decrypts the connection acceptance request message using the acquired encrypt key, and acquires the identifier and password of the terminal 103 from the connection acceptance request message (step S1304). The terminal 104 then compares the acquired identifier and password respectively with the identifier and password acquired earlier from the authentication information message (step S1305), and determines whether the identifiers and passwords match respectively (step S1306).

When both the identifiers and the passwords match (step S1306: Y), the terminal 104 creates a notification message showing "connection accepted" (step S1307), encrypts the notification message using the acquired encrypt key, transmits the encrypted notification message to the terminal 103 that made the connection acceptance request (step S1308), and commences data communication with the terminal 103 (step S1309).

When the identifiers or the passwords do not match at step S1306 (step S1306 : N), the terminal 103 creates a notification message showing "connection denied" (step S1310), encrypts the notification message using the acquired encrypt key, transmits the encrypted notification message to the terminal 103 that made the connection acceptance request (step S1311), and terminates the connection with the terminal 103 (step S1312).

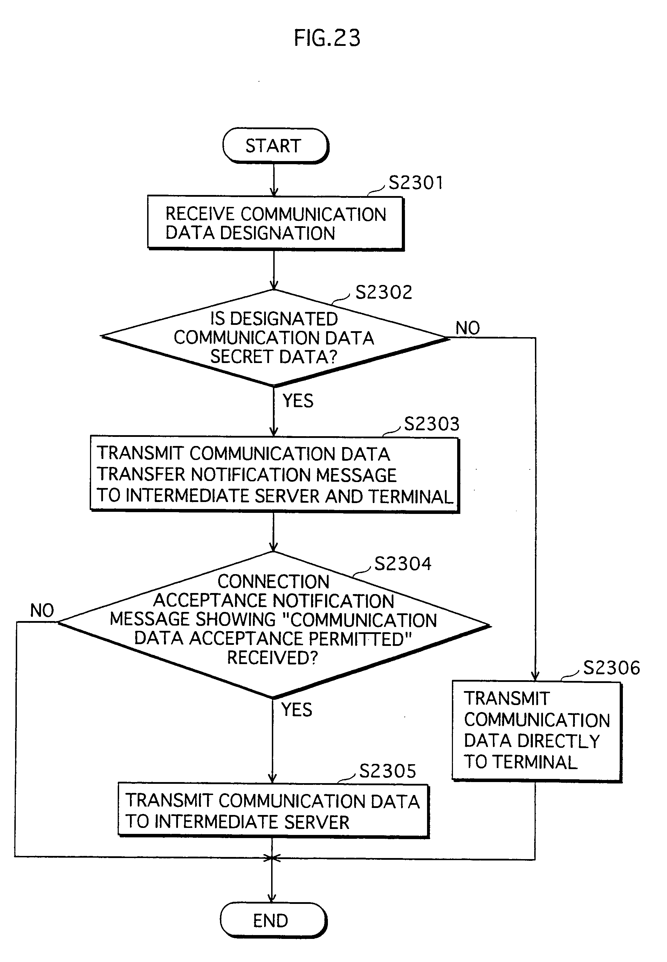

Next, a description is given of operations by the terminals for communication data transmission control processing. FIG. 23 is a flowchart showing the operations. The following describes the operations with reference to FIG. 23.

Note that for brevity, operations are described in terms of the terminal 103 being the transmission source of communication data, and the terminal 104 being the transmission destination of the communication data.

After the terminal 103 commences communication with the terminal 104 at step S1309 and receives a designation from the user via the input unit 407 of communication data to be transmitted to the callee terminal (step S2301), the control unit 401 of the terminal 103 reads the communication data from the information storage unit 406, and refers to the communication data secrecy determination table stored in the storage unit 406 to determine whether or not the designated communication data is secret (step S2302).

When the designated communication data is secret data (step S2302 : Y), the control unit 401 creates a communication data transfer notification message, and transmits the data transfer notification message to the intermediate server 101 and the terminal 104 (step S2303). On receiving a connection acceptance notification message showing "communication data acceptance permitted" from the intermediate server 101 and the terminal 104 (step S2304: Y), the control unit 401 encrypts the read communication data us ing the encrypt key included in the received callee notification message, and transmits the encrypted communication data to the intermediate server 101 (step S2305).

At step S2303 when the designated communication data is not secret (S2303: N), the control unit 401 transmits the read communication data directly to the terminal 104 (step S2306).

On receiving a connection acceptance notification message showing "communication data acceptance not permitted" from the intermediate server 101 or the terminal 104 at step S2304 (step S2304 : N), the control unit 401 ends the communication data transmission processing.

### Second Embodiment

Operations in the present embodiment differ from the first embodiment in that, before communicating with a callee terminal, the intermediate server (an intermediate server 111 in the second embodiment) makes a query to the callee terminal about the state of the terminal, determines whether or not the state of the callee terminal is one of being able to accept communication, and notifies the query terminal if the callee terminal is unable to accept communication. Compositional elements that are identical to those in the communication system 100 of the first embodiment have the same numbering thereas. The following description focuses on aspects that differ from the first embodiment.

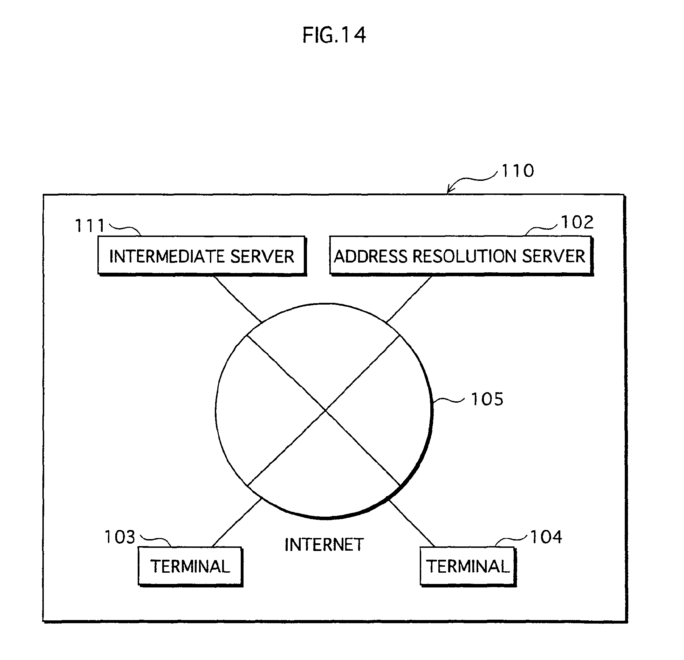

FIG. 14 is a functional block diagram showing the structure of a communication system 110 of the second embodiment of the present invention. The communication system 110 is composed of an intermediate server 111, the address resolution server 102, the terminal 103, and a terminal 114, these compositional elements being connected over the Internet 105.

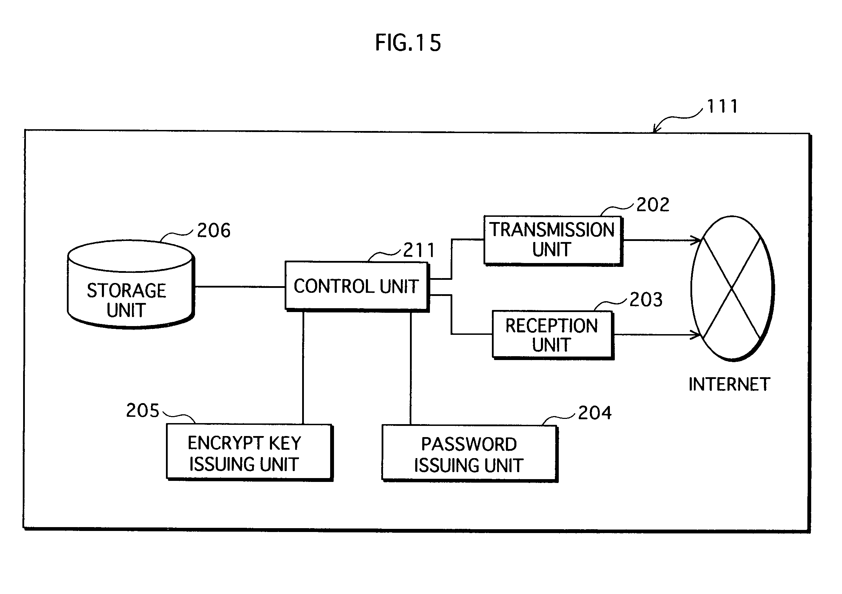

FIG. 15 is a functional block diagram showing the structure of the intermediate server 111.

The intermediate server 111 is composed of a control unit 211, the transmission unit 202, the reception unit 203, the password issuing unit 204, the encrypt key issuing unit 205, and the storage unit 206.

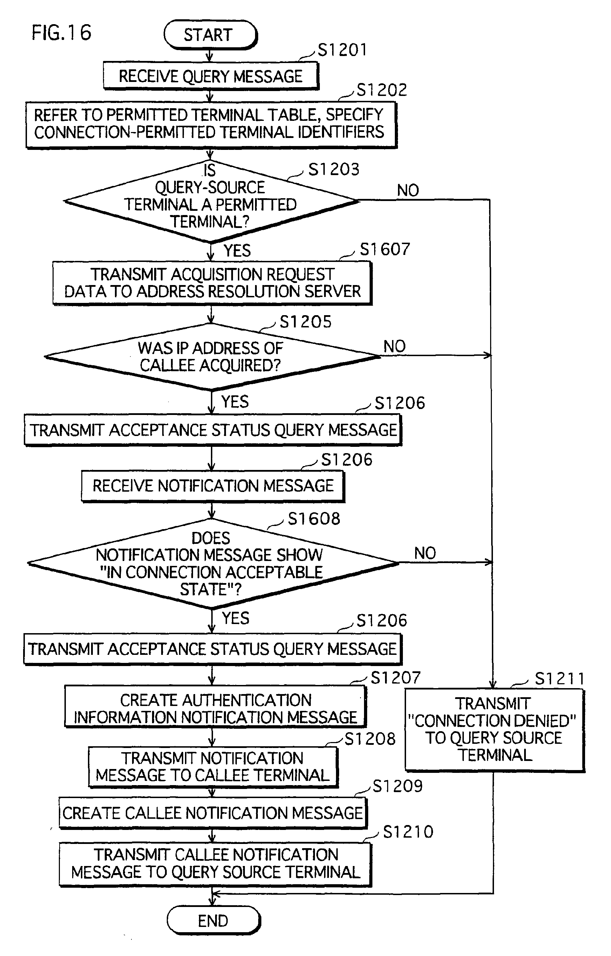

Operations of the control unit 211 differ from operations of the control unit 201 of the first embodiment in terms of the connection control processing. The following description of the operations for connection control processing performed by the control unit 211 focuses on those aspects that differ from the operations for the connection control processing shown in FIG. 12. FIG. 16 is a flowchart showing the operations. The following describes the operations with reference to FIG. 16.

Operations for the processing from step S1201 to step S1205 are the same as in the first embodiment shown in FIG. 12, and therefore a description there of is omitted.

Here, the processing at step S1201 through to step S1210 in FIG. 16 is the same as the steps having the same numbering in FIG. 12, if "the terminal 104" is read as being "the terminal 114". Therefore steps that correspond to steps in FIG. 12 are given the same numbering thereas in order to make the correlation between the steps clear.

After performing the processing from step S1201 to step S1205, when the IP address of the terminal 114 was acquired at step S1205 (step S120 5 : Y), the control unit 211 transmits an acceptance state query message for inquiring to the terminal 114 whether or not the terminal 114 is in a connection acceptable state (step S1606). On receiving a notification message showing a response from the terminal 114 (step S1607), the control unit 211 analyzes the notification message and determines whether or not the notification message indicates "in connection acceptable state" (step S1608).

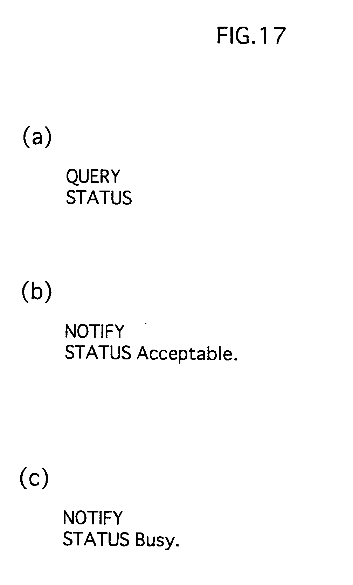

FIG. 17(a) shows a specific example of an acceptance state query message transmitted to the terminal 114 in the above operations. Here, "QUERY" shows that the message is a query message, and "STATUS" shows that the contents of the query are a query as to the connection acceptable state.

FIG. 17 (b) and FIG. 17 (c) showspecific examples of notification messages showing responses from the terminal 114. "NOTIFY" shows that the message is a notification message. "STATUS Acceptable" in FIG. 17(b) shows that the terminal 114 is in a state of being able to accept connection, and "STATUS Busy" in FIG. 17(c) shows that the terminal 114 is a state of denying connection.

When the notification message shows "connection acceptable state" (step S1608 : Y), the control unit 211 performs the processing at step S1206 to step S1210 of FIG. 12. When the notification message shows "connection acceptance denial state" (step S1608: N), the control unit 211 performs the same processing as at step S1211 of FIG. 12.

In addition to the functions of the terminal 104, the terminal 114 has a function of measuring the load on the CPU by continually measuring the number of times the RAM is accessed by the CPU in a set time period. Furthermore, the terminal 114 stores a CPU load upper limit value showing the upper limit of the load.

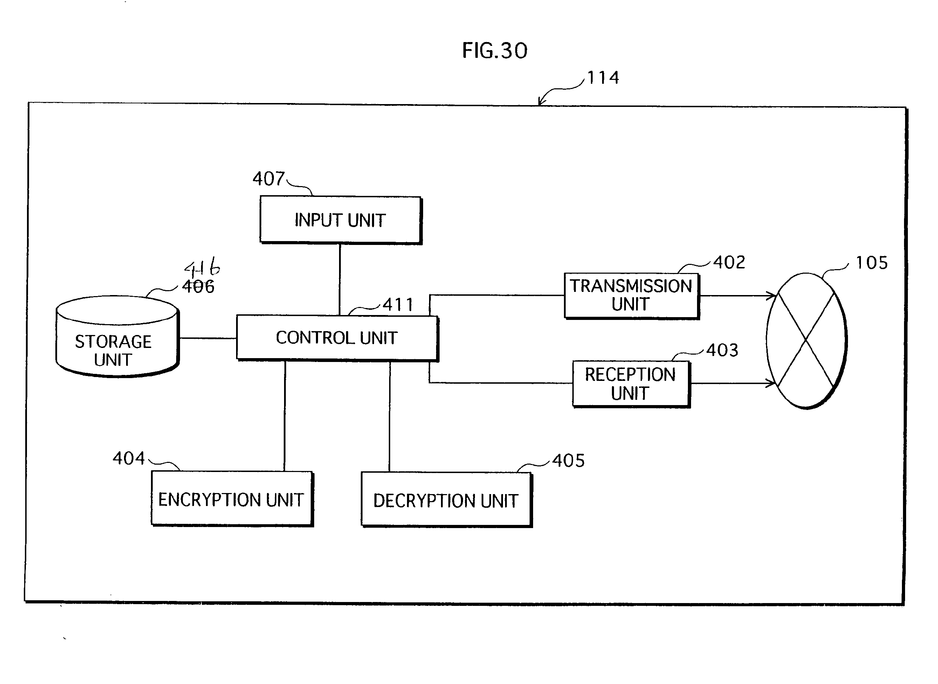

Specifically, the terminal 114 is composed of a control unit 411, the transmission unit 402, the reception unit 403, the encryption unit 404, the decryption unit 405, a storage unit 416, and the input unit 407. In addition to the functions of the control unit 401, the control unit 411 has the function of measuring the load of the CPU. In addition to the functions of the storage unit 406, the storage unit 416 has the function of storing the CPU load upper limit value. FIG. 30 is a functional block diagram showing the structure of the terminal 114.

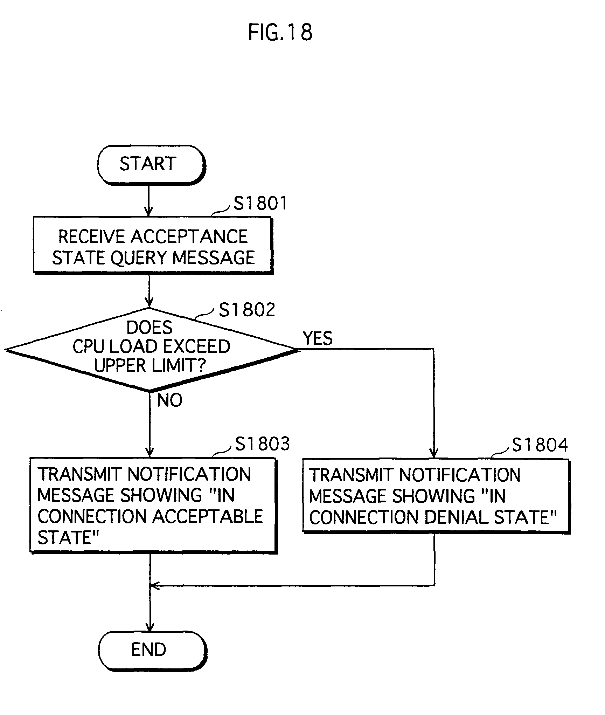

Next a description is given of operations of the terminal 114 for connection acceptable state notification processing which accompanies connection control processing by the control unit 211. This connection acceptable state notification processing is executed before processing identical to the connection acceptance processing in FIG. 13. FIG. 18 is a flowchart showing the operations. The following describes the operations with reference to FIG. 18.

After performing step S1606 of FIG. 16, on receiving an acceptance state query message from the intermediate server 111 (step S1801), the terminal 114 judges whether the CPU load exceeds the CPU load upper limit value (step S1802).

When the CPU load upper limit value is not exceeded (step S1802 : N), the terminal 114 transmits a notification message showing "connection acceptable state" to the intermediate server 111 (step S1803) . When the CPU load upper limit value is exceeded (step S1802 : Y), the terminal 114 transmits a notification message showing "connection denial state" to the intermediate server 111 (step S1804) .

### Third Embodiment

Operations in the present embodiment differ from the second embodiment in that when a callee terminal is in a state of being unable to connect to a query terminal, the intermediate server (an intermediate server 121 in the third embodiment) temporarily stores communication data in response to a communication data storage ask from the query terminal, and then transfers the stored communication data to a callee terminal when the callee terminal becomes able to communicate. Compositional elements that are identical to those in the communication system 110 of the second embodiment have the same numbering thereas. The following description focuses on aspects that differ from the second embodiment.

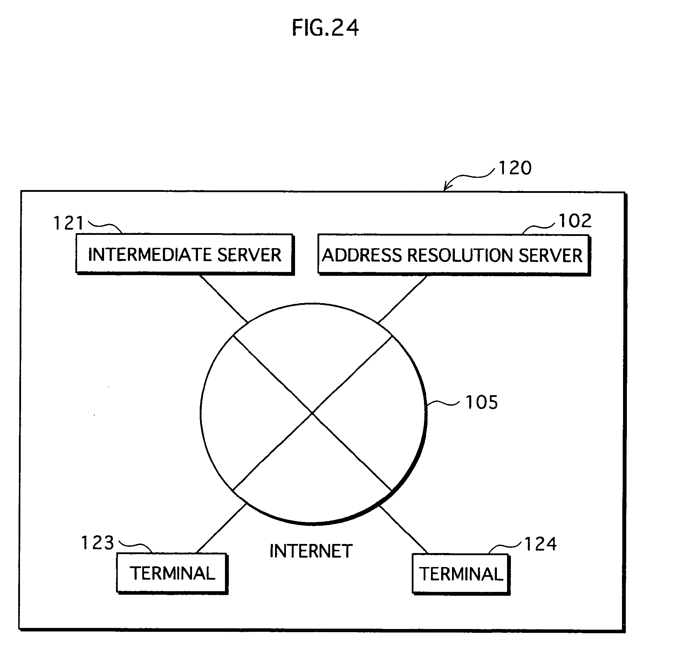

FIG. 24 is a functional block diagram showing the structure of the communication server 120 of the third embodiment of the present invention. The communication system 120 is composed of the intermediate server 121, the address resolution server 102, a terminal 123, and a terminal 124, these compositional elements being connected over the Internet 105.

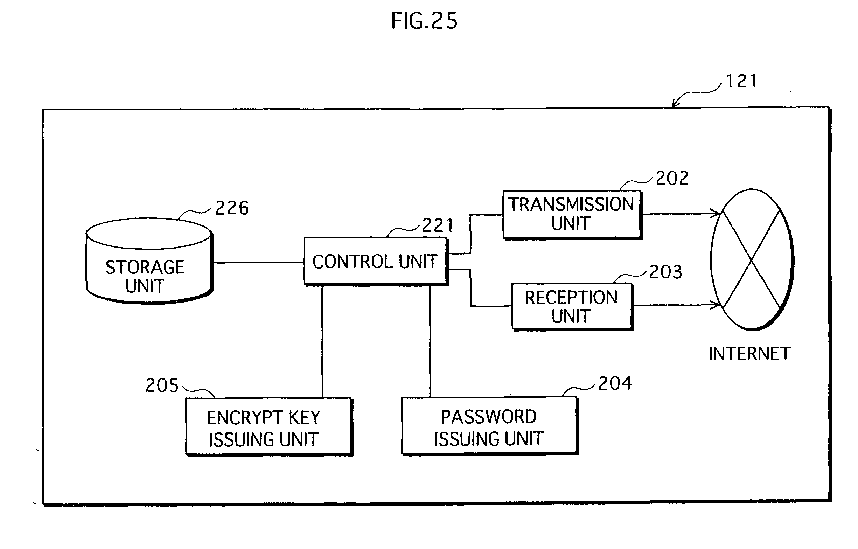

FIG. 25 is a functional block diagram showing the structure of the intermediate server 121.

The intermediate server 121 is composed of the control unit 221, the transmission unit 202, the reception unit 203, the password issuing unit 204, the encrypt key issuing unit 205, and a storage unit 226.

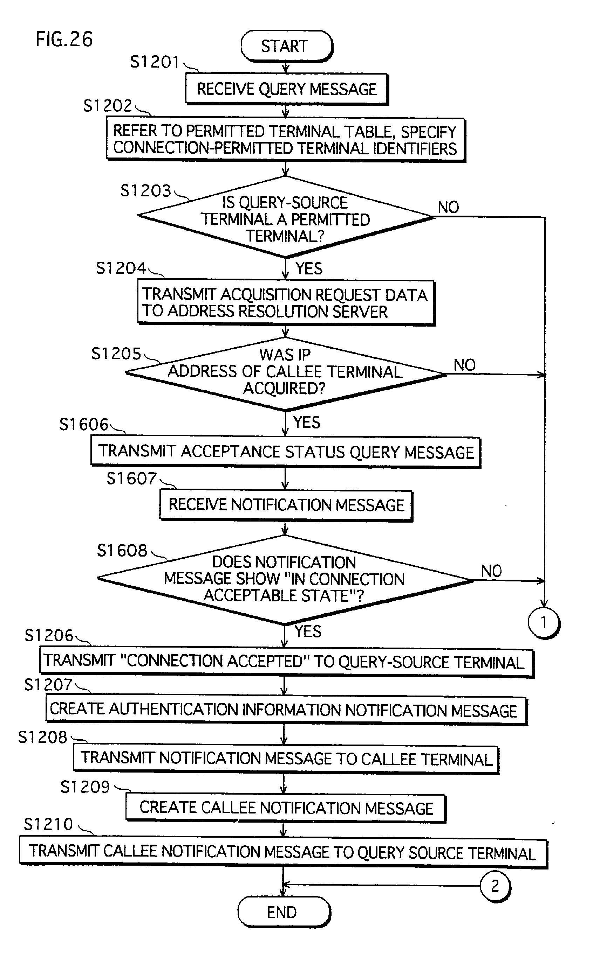

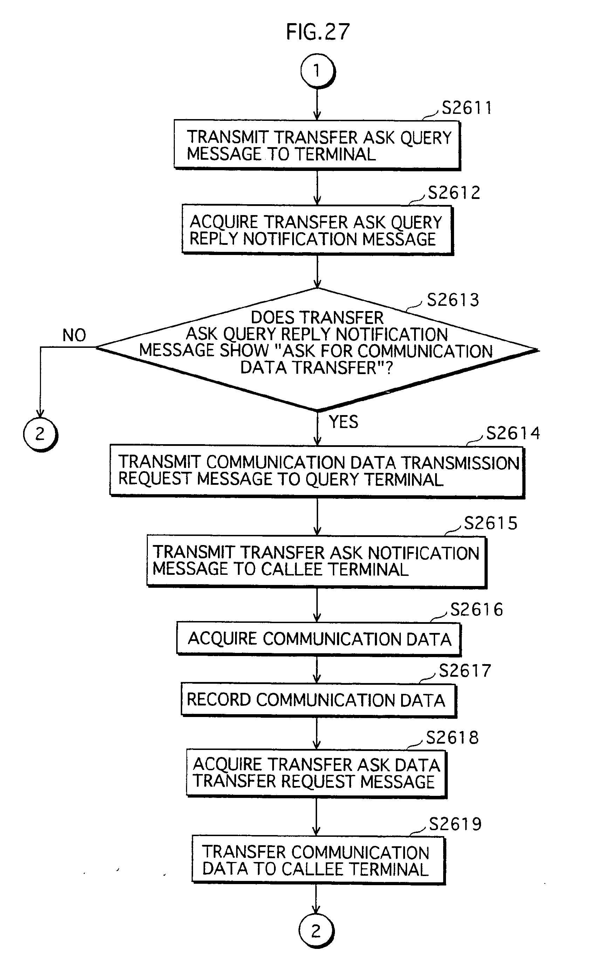

Operations of the control unit 221 differ from operations of the control unit 211 of the second embodiment in terms of the connection control processing. The following description of the operations for connection control processing performed by the control unit 221 focuses on those aspects that differ from the operations for the connection control processing shown in FIG. 16. FIG. 26 and FIG. 27 are flowcharts showing the operations. The following describes the operations with reference to FIG. 26.

Here, the processing at step S1201 through to step S1210 in FIG. 26 is the same as the steps having the same numbering in FIG. 16, if "the terminal 114" is read as being "the terminal 124". Therefore steps that correspond to steps in FIG. 16 are given the same numbering thereas in order to make the correlation between the steps clear.

After performing the processing at steps S1201 to S1205 and S1606 to S1608, when the notification message shows "not in connection acceptable state" at step S1608 (step S1608: N), the control unit 221 creates a transfer ask query message for making a query to the a terminal (the terminal 123 here) as to whether the terminal will ask for transfer of communication data, and transmits the transfer ask query message via the transmission unit 202 to the terminal 123 (step S2611) . The control unit 221 then receives a transfer request query response notification message that is a notification message responding to the transfer ask query message, from the terminal 123 via the reception unit 203 (step S2612), and analyzes the transfer ask query response notification message to determine whether or not the transferrequestquery response notif icationmessage shows "asking for transfer of communication data" (step S2613).

Here, "transfer ask query message" denotes a message that is created by the control unit 221 and is for querying whether or not a terminal (the terminal 123 here) will ask for transfer of communication data. The transfer ask query message includes an identifier showing that the message is a query message, an identifier showing of the intermediate server 121 which is the source of the query, the contents of the query, and the IP address of the terminal 123.

Furthermore, "transfer ask query response notification message" denotes a message that is created by a terminal (the terminal 123 here) and that is a response to a transfer ask query message. The transfer request query response notification message includes an identifier showing that the message is a notification message, the identifier of the terminal 123 which is the transmission source terminal, the IP address of the intermediate server 121, and the response contents.

When the transfer ask query response message shows "asking for transfer of communication data" (step S2613: Y), the control unit 221 creates a communication data transmission request message, and transmits the created communication data transmission request message to the terminal 123 via the transmission unit 202 (step S2614) . Furthermore, the control unit 221 creates a transfer ask notification message and transmits the transfer ask notification message to the terminal 124 (step S2615), and on acquiring communication data from the terminal 123 via the reception unit 203 (step S2616), records the communication data in correspondence with the identifier of the terminal 123, which is the transmission source of the communication data, and the identifier of the terminal 124 , which is the transmission destination, in the storage unit 226 (step S2617). On acquiring a transfer ask data transfer request message from the terminal 124 via the reception unit 203 (step S2618), the control unit 221 reads, from the storage unit 226, the communication data in correspondence with the transmission source terminal identifier and the transmission destination terminal identifier included in the transfer ask data transfer request message, and transfers the communication data to the terminal 124 via the transmission unit 203 (step S2619).

Here, "communication data transmission request message" refers to a message that is created by the control unit 221 and transmitted to the terminal asking for transfer of communication data (the terminal 123 here), and is for requesting transmission of communication data for which transfer is requested. The communication data transmission request message includes an identifier showing that the message is a request message, the contents of the request, the identifier of the intermediate server 121 that is the request source, and the IP address of the terminal 123.

Furthermore, "transfer ask notification message" denotes a message that is created by the control unit 221 and that is for notifying that transfer of communication data has been asked for by the query terminal (the terminal 123 here). The transfer ask notification message includes an identifier showing that the message is a notification message, the notification contents, the identifier of the intermediate server 121, the identifier of the transfer request source terminal (the terminal 123 here), and the IP address of the terminal 124.

Furthermore, "transfer ask data transfer request message" denotes a message that is created and transmitted by the transfer request source terminal (the terminal 124 here) and that is for requesting transfer of communication data stored by the intermediate server 121. The transfer request data transfer request message includes an identifier showing that the message is a request message, the request contents, the identifier of the terminal that is the communication data transfer ask source (the terminal 123 here), the identifier of the terminal that is the transfer request source (the terminal 124 here), and the IP address of the intermediate server 121.

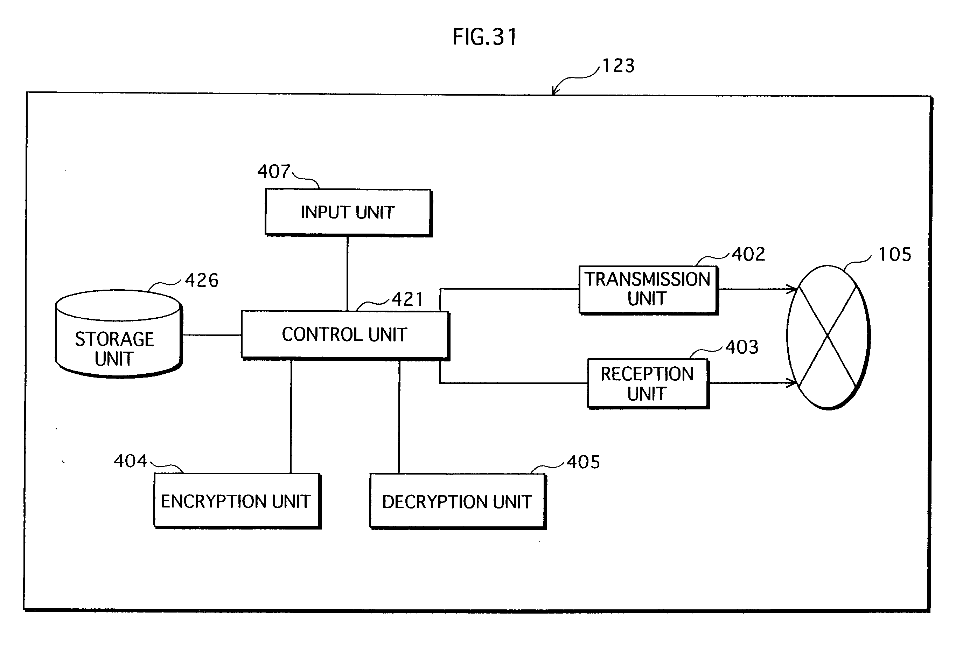

Next, a description is given of operations by the terminal 123 for communication data transfer ask processing when having received a transfer ask query message transmitted by the intermediate server 121 according to the processing at step S2611. The terminal 123, as shown in FIG. 31, is composed of a control unit 421, the transmission unit 402, the reception unit 403, the encryption unit 404, the decryption unit 405, the storage unit 406, and the input unit 407. The control unit 421, in addition to the functions of the control unit 411, performs the function described above.

Note that the control unit 421 may include the functions of a control unit 431 of the terminal 124 described later.

Furthermore, the storage unit 406 may include the functions of a storage unit 436 described later.

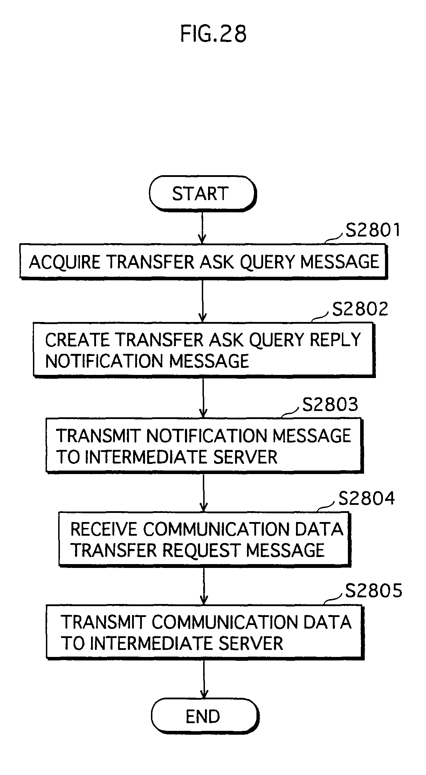

FIG. 28 is a flowchart of the operations.

The following describes the operations with reference to FIG. 28.

On acquiring a transfer ask query message via the reception unit 403 from the intermediate server 121 (step S2801), the control unit 421 creates a transfer ask query response notification message based on a user instruction input via the input unit 407 (step S2802), and transmits the created transfer ask query response notification message to the intermediate server 121 (step S2803). On receiving a communication data transfer request message from the intermediate server 121 (step S2804), the control unit 421 reads, from among the various types of communication data stored in the storage unit 406, communication data specified according to a user instruction input via the input unit 407, and transmits the read communication data to the intermediate server 121 (step S2805).

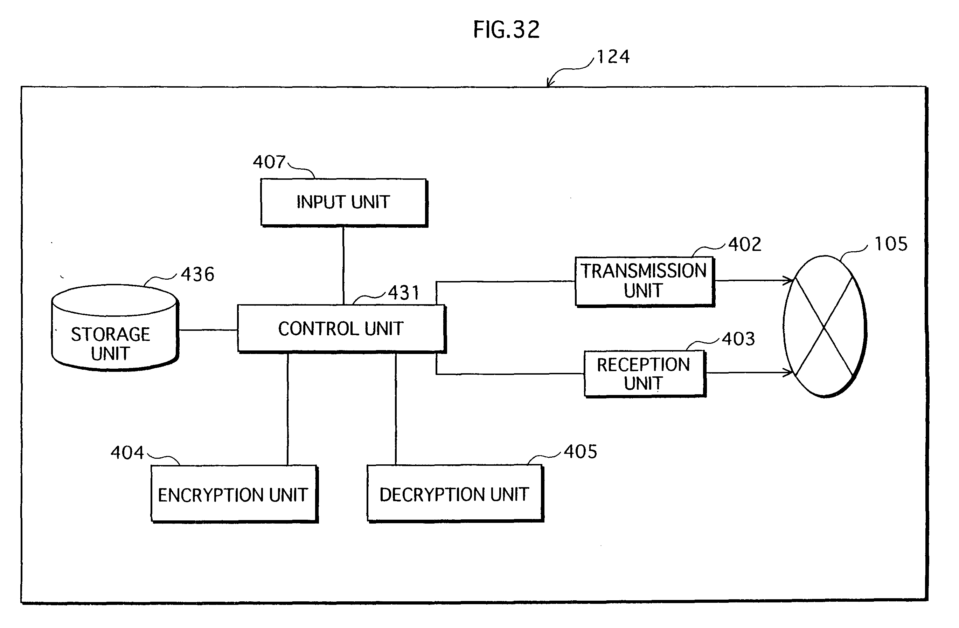

Next, a description is given of operations by the terminal 124 for communication data acceptance control processing when having received a transfer ask notification message according to the processing at step S2615 by the intermediate server 121. The terminal 124, as shown in FIG. 32, is composed of the control unit 431, the transmission unit 402, the reception unit 403, the encryption unit 404, the decryption unit 405, the storage unit 436, and the input unit 407. In addition to the functions of the control unit 411, the control unit 431 performs the processing described above.

Note that the control unit 431 may include the functions of the control unit 421.

Furthermore, the storage unit 436 stores a transfer ask source list, in addition to having the functions of the storage unit 416.

Here, "transfer ask source list" denotes a list of identifiers of terminals that are a transfer ask source of communication data notified via a transfer ask notification message from the intermediate server. Each time a transfer ask notification message is notified to the terminal 124, the transfer ask source terminal identifier included in the transfer ask notification message is extracted by the control unit 431, and added to the transfer ask source list. Each time control data from a transfer ask source already included in the list is acquired by the control unit 431, the control unit 431 deletes the identifier of the transfer ask source from the list.

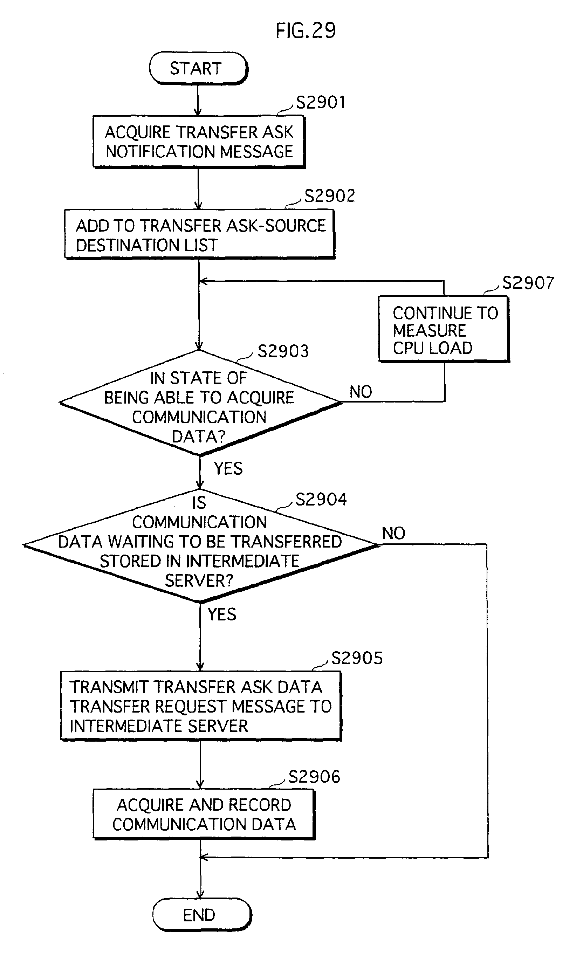

FIG. 29 is a flowchart showing the operations.

On receiving a transfer ask notification message via the reception unit 403 (step S2901), the control unit 431 acquires the transfer ask source identifier from the transfer ask notification message, and adds the transfer ask source identifier to the transfer destination ask source list (step S2902) . The control unit 431 the determines whether or not the terminal 124 is in a state of being able to accept the communication data for which the transfer ask is being made, according to whether or not the CPU load exceeds the CPU load upper limit value (step S2903).

When the CPU load upper limit value is not exceeded, the control unit 431 determines that the terminal 124 is in a state of being able to acquire the communication data (step S2903: Y), and refers to the transfer ask source list stored in the storage unit 436 to determine whether or not the communication data waiting to be transferred is held in the intermediate server 121, according to whether or not the transfer ask source identifier is recorded in the transfer ask source list (step S2904).

When the transfer ask source identifier is recorded in the transfer ask source list, the control unit 431 determines that the communication data waiting to be transferred is held in the intermediate server 121 (step S2904: Y), creates a transfer ask data transfer request message based on the transfer ask source identifier, and transmits the transfer ask data transfer request message to the intermediate server (step S2905). The control unit 431 then acquires the communication data for which a transfer ask has been made by the transfer ask source terminal from the intermediate server 121 via the reception unit 403, and records the acquired communication data in the storage unit 436 (step S2906).

At step S2903, when the CPU load exceeds the CPU load upper limit (step S2903: N), the control unit 431 continues to measure the CPU load (step S2907), and proceeds to step S2903.

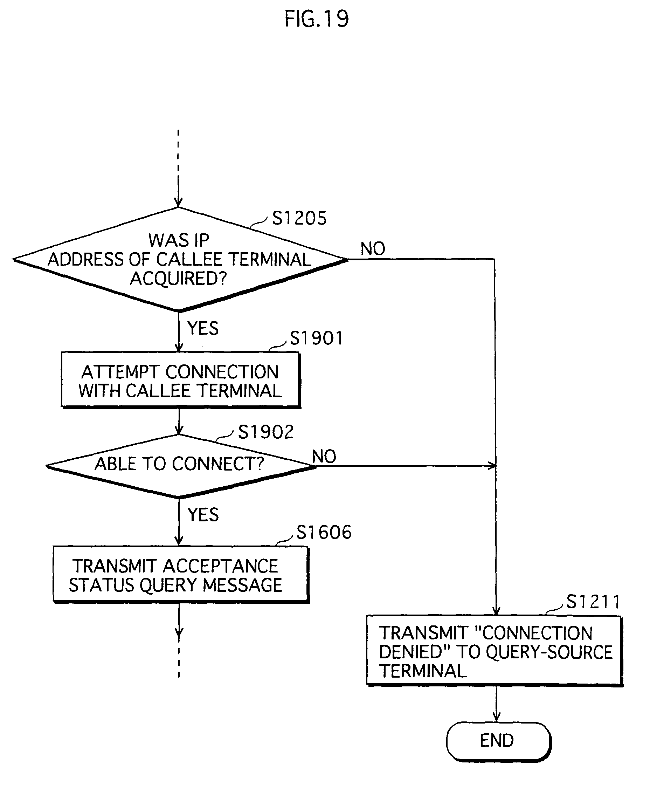

Although preferred embodiments of the present invention have been described, the present invention is, of course, not limited to these preferred embodiments.
(1) In the first to third embodiments, the intermediate server and the address resolution server are separate compositional elements of the communication systems 100, 110, and 120. However, the intermediate server may include the functions of the address resolution server. In such a case the communication systems 100, 110 , and 120 have a structure that does not include an address resolution server.
   Specifically, the intermediate server 101, 111, or 121 acquires, via the reception unit 203, the IP address and identifier transmitted from terminals connected to the Internet, creates an IP address correspondence table, and registers the IP address correspondence table in the storage unit 206.
(2) In the first to third embodiments, the address resolution server 102 registers IP addresses of terminals to the IP address correspondence table based on the IP address and the identifier of a terminal that are transmitted directly from the terminal to the address resolution server. However, the registration may be performed by the intermediate server 101, 111, or 121 receiving the IP addresses and identifiers transmitted from the terminals, and then transmitting the IP addresses and identifiers to the address resolution server 102 which then registers the IP addresses and identifiers.
   As an alternative, the address resolution server 102 may receive a terminal identifier directly from a terminal or via the intermediate server 101, 111, or 121, obtain the IP address of the terminal of the identifier by making a query to the server of the provider that allocated the IP address to the terminal, and obtaining the IP address from the server. The address resolution server 102 then registers the obtained IP address in the IP address correspondence table.
(3) In the first to third embodiments, the address resolution server 102 registers each terminal identifier in correspondence with the IP address of the terminal in the IP address correspondence table. However, instead of acquiring each IP address from the terminals, the address resolution server 102 may acquire information (a domain name, for instance) that specifies the IP address, and register the information in the IP address correspondence table. Furthermore, the address resolution server 102 may transmit the information to the intermediate server 101 or 111 as a response to acquisition request data from the intermediate server. In this case, having acquired the information, the intermediate server may acquire the IP address by, for instance, querying a DNS server about the IP address corresponding to the information.
(4) In the first to third embodiments, the identifier of the terminals may be anything that differentiate terminals, an example being anything that is easily remembered by users, such as a telephone number, or a combination of a user name and address.
   Furthermore, connection permission may be registered using identifiers that express specific terminal groups. This enables a terminal to give connection permission to groups of other terminals by registering the group identifier as a connection-permitted terminal identifier in the intermediate server 101 or 110.
(5) In the first to third embodiments, the terminal 103 may perform authentication processing before query message transmission/reception processing shown by step S1101 in FIG. 11 and step S1201 in FIG. 12, FIG. 16, and FIG. 26.
   Specifically, before transmitting the query message, the terminal 103 transmits its identifier and a password for authentication, and the intermediate server 101, 111, or 121 performs authentication processing of the terminal 103 by comparing the received password with a comparison password stored in correspondence with the identifier of the terminal 103 or 123 in advance in the storage unit 206 or 226. The processing from step S1201 onwards in FIG. 12 (FIG. 16 in the case of the intermediate server 111, and FIG. 26 in case of the intermediate server 121) is performed when the passwords match.
   This kind of authentication processing may be performed by the terminal 104, 114 , or 124 and the intermediate server 101, 111, and 121 before commencing communication.
   Note that a method other than the described method may be used for authentication. For instance, certificates issued by a certification authority may be exchanged.
(6) In the operations for connection control processing by the intermediate server in the first and second embodiments as shown in FIG. 12 and FIG. 16, when the result of the determination at step S1203, step S1205 (FIG. 12 and FIG. 16) and step S1608 (FIG. 16) is "denied", the notification message "connection denied" , as shown in FIG. 5(c), is transmitted to the terminal 103. However, communication messages of differing contents may be transmitted at each of the described steps.
   For instance, the notification message shown in FIG. 5(c) may be transmitted to the terminal 103 at step S1203, the notification message shown in FIG. 5(g) may be transmitted to the terminal 103 at step S1205, and the notification message shown in FIG. 5(h) may be transmitted to the terminal 103 at step S1608.
   Alternatively, a message notifying the reason that connection was denied may be transmitted at each of the steps.
   For instance, a notification message indicating that the terminal is not a terminal permitted as a callee terminal may be transmitted at step S1203. A notification message indicating that the IP address of the callee terminal was not able to be acquired may be transmitted at step S1205. A notification message indicating that the callee terminal is not in a connection acceptable state may be transmitted at step S1608.
   This enables the party making the query to know why it is unable to connect to the callee terminal.
(7) In the first to third embodiments, communication between the terminals and the intermediate server 101, 111, or 121 may be performed using SSL (Secure Socket Layer) or TSL (Transport Layer Security).
   This is effective in preventing interception of data.
(8) In the first to third embodiments, the port number with which the terminal 104 or the terminal 114 receives the connection from the terminal 103, or the port number with which the terminal 124 receives the connection from the terminal 123 may be a predetermined port number (for instance, an internationally stipulated Well-known Port Number). Alternatively, port numbers may be registered together with IP addresses in the IP address correspondence table stored in the storage unit 304 of the address resolution server 102, and the terminal 103 or 123 may receive a connection reception port number of the callee terminal (the terminal 104, 114 or 124) via the intermediate server 101, 111, or 121.
   This enables a unique connection reception port number to be registered for each callee terminal, and therefore a callee terminal is able to be accessed only by terminals that designate the unique port number. This is effective in preventing illegal access from other terminals.
(9) In the first to third embodiments, the comparison of the passwords at step S1305 of FIG. 13 may be performed not only by the connection acceptance request destination terminal, but also by the connection acceptance request source terminal acquiring the password from the connection request destination terminal.
   In this case, a possible structure is one in which the processing at step S1307 to step S1309 is performed when the passwords match in both terminals.
   Note that the terminals use respectively different passwords in the comparison.
(10) In the communication data transmission control processing in the first embodiment, the control unit 401 determines whether or not to transmit communication data specified by the user to the callee terminal via the intermediate server 101 depending on whether or not the communication data is secret data. However, this determination may insteadbe made according to the size of the specified communication data.
   Similarly, in communication data control processing in the second and third embodiments, the control unit 411, 421 or 431 may make the determination according to the size of the specified communication data.
   For instance, the communication data may be transmitted directly to the callee terminal in the case of data that composes video and is therefore large in size, and the communication data may be transmitted to the callee server via the intermediate server 101 in the case of data that composes a still image and is therefore not large in size.
   Specifically, the storage unit 406 may store, in advance, a communication data size determination table that shows correlation between each communication data and the respective communication data size. On receiving, from the user via the input unit 407, a specification of communication data to be transmitted to a callee terminal, the control unit 401 refers to the communication data size determination table to determine whether the size of the communication data exceeds a predetermined threshold value. When the size does not exceed the threshold value, the control unit 401 determines that the communication data is to be transmitted via the intermediate server 101, and when the size exceeds the threshold value, the control unit 401 determines that the communication data is to be transmitted directly to the callee server.
   Furthermore, the control unit 401 may determine that part of the specified communication data is to be transmitted to the intermediate server 101 and that the remaining part of the specified communication data is to be transmitted directly to the callee server. In the second and third embodiments also, the control unit 411, 421, or 431 of the terminal may make the determination in the described manner.
   Take for instance a case in which communication data stored in the storage unit 406 is a video data stream that has been compressed using interframe prediction according to the specification of MPEG (Moving Picture Expert Group)-2, and the video stream is composed of GOP (Group of Picture) units that are each made up of one I picture and a plurality of B pictures and P pictures. Upon the video data stream being specified by the user as communication data to be transmitted to a callee terminal, the control unit 401 gives a serial number to each picture in the video data stream. The serial numbers correspond to the position of the pictures within the video data stream. The control unit 401 then extracts the I pictures from the video data stream, encrypts the I pictures using the encryption key included in the callee notification message, asks the intermediate server 101 to transfer the I pictures, and transmits the encrypted I pictures to the intermediate server 101. The control unit 401 further determines that the extracted I pictures are to be transmitted to the callee terminal via the intermediate server 101 and that the remaining B pictures and P pictures are to be transmitted directly to the callee terminal. In the second and third embodiments also, the control unit 411, 421, or 431 of the terminal may make the determination in the described manner.
   Note that the determination of whether or not the communication stream is a video stream may be made, for instance, in the following manner. A communication data type determination table is stored in advance in the storage unit 406. The communication data type determination table shows correlation between each communication data and the type of the communication data. On receiving, from the user via the input unit 407, a specification of communication data to be transmitted to a callee terminal, the control unit 401 makes the determination by referring to the communication data type determination table.
   As a result, communication data other than I pictures is transmitted directly without being encrypted. Since restoration of encryption is unnecessary in the callee terminal, the load for decrypting the communication data is reduced. Furthermore, I pictures, which are essential in reproduction of video data, are transmitted after being encrypted. This means that even if data communication is intercepted by another party for some reason, the video data can be prevented from being played by the party.
(11) In the second embodiment, when transmitting a reception state query message to the terminal 114, the intermediate server 111 may transmit a notification message showing "connection denied" to the terminal 103 also when connection cannot be established with the terminal 114.
   Specifically, operations for the connection establishment determination processing shown in FIG. 19 (step S1901 and step S1902) may be added between the steps S1205 and S1606 of the flowchart of FIG. 16.
   The following describes the operations with reference to FIG. 19.
   At step S1205 of FIG. 16, when the IP address of the callee terminal 114 was able to be acquired (step S1205: Y), the control unit 211 attempts to connect to the terminal 114 (step S1901), and when able to connect (step S1902: Y), performs the processing at step S1606 onwards shown in FIG. 16. When not able to connect (step S1902: N), the control unit 211 performs step S1211 in FIG. 16.
(12) In the second embodiment, the terminal 114 measures the CPU load, and determines whether or not to accept connection according to whether or not the measured CPU load exceeds the CPU load upper limit (step S1802 of FIG. 18). However, a method other than this method of measuring the CPU load may be used to determine whether or not to accept connection. For instance, at the time of receiving an acceptance state query message, the terminal 114 determines whether or not it is currently communicating with another terminal, and when not, transmits a notification message indicating "in connection acceptable state" to the intermediate server 111. When currently communicating with another terminal, the terminal 114 transmits a notification message indicating "in connection denial state" to the intermediate server 111.
   Furthermore, in the third embodiment, when receiving an acceptance state query message, the terminal 124, in the same manner as the terminal 114, may determine whether it is currently communicating with another terminal, and transmit a notification message to the intermediate server 121 based on the determination result in the manner described above.
(13) In the first to third embodiments, the protocol used for transmission and reception of communication data may be, for example, HTTP (Hyper Text Transfer Protocol), RTP (Real-Time Transport Protocol), RTSP (Real-Time Streaming Protocol)/RTP (Real-Time Transport Protocol), or FTP (File Transfer Protocol).
   Furthermore, in the first to third embodiments, when transmitting multimedia data such as video data, audio data, and image data, a protocol stipulated by UPnP AV may be used as the data communication control protocol.
   UPnP (Universal Plug & Play) is a technical specification developed by the UPnP Forum so that devices, such as computers and peripherals, connected to a network recognize each other and function . A UPnP AV (UPnP AV Architecture) is a specification developed as a method for transferring and reproducing digital contents in a home network with UPnP.
(14) In the communication systems of the first to third embodiments, after a connection is established between terminals, communication data transfer processing for the intermediate server to transfer communication data to a transmission destination terminal is performed in response to being asked to do so by a transmission source terminal. However, it is not mandatory that these transfer processing is performed in communication systems.

## Claims

1. A communication system including a first communication terminal, asecondcommunicationterminal, and a communication control server, the communication control server notifying destination information for specifying an address of the second communication terminal on a network, and the first communication terminal transmitting a request message to the communication control server to request the destination information,
the communication control server comprising:
a permitted-terminal table storage unit operable to store a permitted-terminal table that shows correlation between the second communication terminal and one or more connection-permitted communication terminals that are permitted to connect to the second communication terminal;
a request message reception unit operable to receive the request message;
a terminal determination unit operable to determine, based on the permitted-terminal table, whether or not the first communication terminal that transmitted the received request message is a connection-permitted communication terminal; and
a notification control unit operable to notify the first communication terminal of the destination information, only when the first communication terminal has been determined to be a connection-permitted communication terminal.

2. The communication system of Claim 1, wherein
the notification control unit includes:
an authentication information creation sub-unit operable to, only when the first communication terminal has been determined to be a connection-permitted terminal, create authentication information for the second communication terminal to authenticate the first communication terminal,
the notification control unit further notifies the authentication information to the first communication terminal and the second communication terminal,
the first communication terminal transmits the notified authentication information to the second communication terminal when making a connection request to the second communication terminal, and
the second communication terminal comprises:
a reception unit operable to receive the authentication information from the first communication terminal;
a determination unit operable to determine whether or not the received authentication information and the notified authentication information match; and
a connection control unit operable to permit a connection from the first communication terminal, only when the received authentication information and the notified authentication information match.

3. The communication system of Claim 1, wherein
the notification control unit includes:
an encrypt key creation unit operable to create an encrypt key for encryption and decryption of information transmitted between the first communication terminal and the second communication terminal, and
the notification control unit further notifies the encrypt key to the first communication terminal and the second communication terminal.

4. The communication system of Claim 1, wherein
the notification control unit further, before notifying the first communication terminal of the destination information of the second communication terminal, transmits a query message to the second communication terminal, the query message querying as to whether or not the second communication terminal is able to accept a connection from the first communication terminal,
the second terminal comprises:
a reception unit operable to receive the query message; and
a connection acceptability notification unit operable to determine, according to a load state upon receiving the query message, whether or not the connection from the first communication terminal is able to be accepted, and notify the communication control server of an acceptability notification message that shows a result of the determination,
the notification control unit includes:
a connection acceptability determination sub-unit operable to determine, based on the notified acceptability notification message, whether or not the second communication terminal is in a state of being able to accept the connection from the first communication terminal, and
when the second communication terminal is in a state of being able to accept the connection, the notification control unit notifies the first communication terminal of the destination information.

5. The communication system of Claim 4, wherein
when the first communication terminal is determined not to be a connection-permitted terminal, the notification control unit notifies the first communication terminal of a notification message showing that the first communication terminal is not permitted to connect to the second communication terminal, and
when the second communication terminal is in a state of being unable to accept the connection from the first communication terminal, the notification control unit notifies the first communication terminal that the second communication terminal is unable to accept the connection.

6. A communication terminal that is connected to a communication control server over a network, comprising:
a permitted-communication terminal registration request unit operable to make a request, to the communication control server, to register one or more communication terminals that are permitted to connect to the communication terminal;
an authentication information reception unit operable to, when a communication terminal that has requested destination information for specifying an address of the communication terminal on the network is any one of the communication terminals that are permitted to connect to the communication terminal, receive authentication information for authenticating the communication terminal that requested the destination information;
an identification information reception unit operable to receive, from the communication terminal that requested the destination information, a connection acceptance request and identification information that identifies the communication terminal that requested the destination information;
a determination unit operable to determine whether or not the authentication information and the identification information match; and
a connection control unit operable to permit a connection based on the connection acceptance request from the terminal that requested the destination information,only when the authenticationinformation and the identification information match.

7. The communication terminal of Claim 6, wherein
the identification information reception unit further, before the connection acceptance request is transmitted, receives a query message from the communication control unit, the query message querying whether or not a connection from the communication terminal that requested the destination information is able to be accepted, and
the connection control unit determines whether or not the connection from the first communication terminal is able to be accepted according to a load state upon receiving the query message, and notifies the communication control server of a result of the determination.

8. The communication terminal of Claim 7, wherein
the identification information reception unit, when the communication terminal is in a state of being unable to accept the connection from the communication terminal that requested the destination information, receives a transfer ask notification message from the communication control server, the transfer ask notification message notifying that a communication data transfer ask has been made by the communication terminal that requested the destination information, and
the communication terminal comprises:
a communication data acquirability determination unit operable to determine, according to a load state, whether or not the communication terminal has come to be in a state of being able to acquire the communication data;
a transfer request message transmission unit operable to, when the communication terminal has come into a state of being able to acquire the communication data after the transfer ask notification message has been received, transmit a transfer request message that requests transfer of the communication data; and
an acquisition unit operable to acquire the communication data transmitted from the communication control server in response to the transfer request message.

9. The communication terminal of Claim 6, further comprising:
a storage unit operable to store a plurality of types of communication data potentially transmitted to a callee communication terminal, each type of communication data being stored in correspondence with a respective data attribute thereof;
a transmission unit operable to transmit a request message to the communication control server, the request message requesting destination information for specifying the address of a callee communication terminal on the network;
an acquisition unit operable to obtain the destination information notified by the server, only when the communication terminal is permitted to connect to the callee terminal;
a connection establishment unit operable to establish a connection with the callee communication terminal based on the acquired destination information;
a designation reception unit operable to receive a designation of communication data to be transmitted;
a data attribute determination unit operable to determine whether or not the designated communication data has a specific data attribute;
a transfer ask unit operable to, when the designated communication data has the specific data attribute, ask the communication control server to transfer the designated communication data to the callee communication terminal; and
a transmission control unit operable to control such that (i) when the designated communication data has the specific data attribute, the designated communication data is transmitted to the communication control server, and (ii) when the designated communication data does not have the specific data attribute, the designated communication data is transmitted directly to the callee terminal.

10. The communication terminal of Claim 9, wherein
the transmission control unit includes:
an extraction sub-unit operable to, when the designated communication data is MPEG-encoded video data, extract an I picture from the video data; and
an encryption sub-unit operable to encrypt the extracted I picture,
the transfer ask unit asks that the encrypted I picture be transferred to the callee communication terminal, and
the transmission control unit transmits the encrypted I picture to the communication control server, and transmits remaining video data excluding the I picture directly to the connected callee communication terminal.

11. The communication terminal of Claim 9, wherein
the data attributes show whether or not the communication data is secret,
the transfer ask unit, when the data attribute of the designated communication data shows that the designated communication data is secret, asks the communication control server to transfer the designated data to the callee communication terminal, and
the communication control unit, when the data attribute of the designated communication data shows that the designated communication data is secret, encrypts the designated communication data, and transmits the encrypted designated communication data to the communication control server.

12. The communication terminal of any of Claims 6 to 11, wherein the address is an IP address.

13. The communication terminal of any of Claims 6 to 11, wherein the address is composed of an IP address and a port number.

14. The communication terminal of any of Claims 6 to 13, wherein the address changes from time to time.

15. A communication control server that notifies destination information for specifying an address of a communication terminal, comprising:
a permitted-terminal table storage unit operable to store a permitted-terminal table that shows correlation between the communication terminal and one or more connection-permitted communication terminals that are permitted to connect to the communication terminal;
a request message reception unit operable to receive a request message from a request-source communication terminal, the request message requesting the destination information;
a terminal determination unit operable to determine, based on the permitted terminal table, whether or not the request-source communication terminal is a connection-permitted communication terminal; and
a notification control unit operable to notify the request-source communication terminal of the destination information of the communication terminal, only when the request-source communication terminal is determined to be a connection-permitted communication terminal.

16. A connection control program used in a communication terminal that is connected to a communication control server over a network, the connection control program comprising:
a permitted-communication terminal registration request step of making a request, to the communication control server, to register one or more communication terminals that are permitted to connect to the communication terminal;
an authentication information reception step of, when a communication terminal that has requested destination information for specifying an address of the communication terminal on the network is any one of the communication terminals that are permitted to connect to the communication terminal, receiving authentication information for authenticating the communication terminal that requested the destination information;
an identification information reception step of receiving, from the communication terminal that requested the destination information, a connection acceptance request and identification information that identifies the communication terminal that requested the destination information;
a determination step of determining whether or not the authentication information and the identification information match; and
a connection control step of permitting a connection based on the connection acceptance request from the terminal that requested the destination information,only when the authentication information and the identification information match.

17. A computer-readable recording medium on which is recorded a connection control program used in a communication terminal that is connected to a communication control server over a network, the connection control program comprising:
a permitted-communication terminal registration request step of making a request, to the communication control server, to register one or more communication terminals that are permitted to connect to the communication terminal;
an authentication information reception step of, when a communication terminal that has requested destination information for specifying an address of the communication terminal on the network is any one of the communication terminals that are permitted to connect to the communication terminal, receiving authentication information for authenticating the communication terminal that requested the destination information;
an identification information reception step of receiving, from the communication terminal that requested the destination information, a connection acceptance request and identification information that identifies the communication terminal that requested the destination information;
a determination step of determining whether or not the authentication information and the identification information match; and
a connection control step of permitting a connection based on the connection acceptance request from the terminal that requested the destination information, only when the authentication information and the identification information match.

18. A connection control method used in a communication terminal that is connected to a communication control server over a network, the connection control method comprising:
a permitted-communication terminal registration request step of making a request, to the communication control server, to register one or more communication terminals that are permitted to connect to the communication terminal;
an authentication information reception step of, when a communication terminal that has requested destination information for specifying an address of the communication terminal on the network is any one of the communication terminals that are permitted to connect to the communication terminal, receiving authentication information for authenticating the communication terminal that requested the destination information;
an identification information reception step of receiving, from the communication terminal that requested the destination information, a connection acceptance request and identification information that identifies the communication terminal that requested the destination information;
a determination step of determining whether or not the authentication information and the identification information match; and
a connection control step of permitting a connection based on the connection acceptance request from the terminal that requested the destination information, only when the authentication information and the identification information match.
